# EUROPEAN PATENT APPLICATION

(11) **EP 4 804 707 A1**
(43) Date of publication of application: **09.09.2026**
(21) Application number: 26163374.7
(22) Date of filing: 09.03.2026
(51) Int. Cl.: H04W 74/0816, G01S 13/00, H04B 5/45

(54) **SYSTEMS AND METHODS FOR PROTECTING CHANNEL ACCESS DURING BACKSCATTER COMMUNICATION**

(30) Priority: 07.03.2025 US 202563768695 P; 09.05.2025 US 202563803170 P; 17.07.2025 US 202563845951 P
(71) Applicant: Haila Technologies Inc., Montreal, QC H4C 2K1 (CA)
(72) Inventor: Nishat, Muhammad Kamran, Montreal H4C 2K1 (CA); Kezys, Vytas, Montreal H4C 2K1 (CA); Costa, Nelson, Montreal H4C 2K1 (CA)
(74) Representative: Greaves Brewster LLP

(57) **Abstract**

There is provided a method of backscatter communication comprising: transmitting, by a transmitter, a communication frame on at least one of a first channel and a second channel, the communication frame comprising: timing data indicating a transmission time and a duration of an excitation signal to be transmitted by the transmitter on the first channel; receiving, by the receiver, the communication frame; protecting, by the transmitter or the receiver, access to the first channel and the second channel for a protection period corresponding to the transmission time and the duration of the excitation signal; transmitting, by the transmitter, the excitation signal on the first channel; and backscattering, by a backscattering tag, the excitation signal to generate a backscattered signal on the second channel.

## Description

### REFERENCE TO RELATED APPLICATIONS

This application claims priority to U.S. Provisional Application No. 63/768,695, filed on March 7th, 2025, U.S. Provisional Application No. 63/803,170, filed on May 9th, 2025, and U.S. Provisional Application No. 63/845,951, filed on July 17th, 2025, the complete disclosures of which are incorporated herein by reference.

### FIELD

The present subject-matter relates to backscatter communication systems and methods, and more particularly to protecting channel access during backscatter communication.

### BACKGROUND

Backscatter communication has attracted interest for applications such as implantable sensors, wearables, and smart home sensing because of its ability to offer low power connectivity to these sensors. Such applications have severe power constraints. Implantable sensors for example have to last for years, while even more traditional smart home monitoring applications may benefit from sensors and actuators that can last several years. Backscatter communication can satisfy the connectivity requirements while consuming such low power as to be energized by harvesting energy, or with batteries that could last several years.

### SUMMARY OF THE VARIOUS EMBODIMENTS

The following introduction is provided to introduce the reader to the more detailed discussion to follow. The introduction is not intended to limit or define any claimed or as yet unclaimed invention. One or more inventions may reside in any combination or sub-combination of the elements or process steps disclosed in any part of this document including its claims and figures.

In one broad aspect, there is provided a method of backscatter communication comprising: transmitting, by a transmitter, a communication frame on at least one of a first channel and a second channel, the communication frame comprising: timing data indicating a transmission time and a duration of an excitation signal to be transmitted by the transmitter on the first channel; receiving, by the receiver, the communication frame; protecting, by the transmitter or the receiver, access to the first channel and the second channel for a protection period corresponding to the transmission time and the duration of the excitation signal; transmitting, by the transmitter, the excitation signal on the first channel; and backscattering, by a backscattering tag, the excitation signal to generate a backscattered signal on the second channel.

In some embodiments, the transmitter and the receiver each sense both the first channel and the second channel simultaneously.

In some embodiments, the first channel and the second channel occupy non-overlapping portions of a CBW40 channel.

In some embodiments, the first channel and the second channel are each a 20 MHz channel.

In some embodiments, the transmitter protects access to the first channel for the protection period by transmitting a first Clear to Send-to-Self (CTS-to-self) packet on the first channel and the transmitter protects access to the second channel for the protection period by transmitting a second CTS-to-self packet on the second channel.

In some embodiments, the first CTS-to-self packet comprises a first transmission opportunity (TXOP) duration and the second CTS-to-self packet comprises a second TXOP duration, the first TXOP duration and the second TXOP duration being the same.

In some embodiments, the method may further comprise transmitting, by the transmitter, on the first channel and the second channel, a preamble and at least one initial field after transmitting the first CTS-to-self packet and the second CTS-to-self packet.

In some embodiments, the at least one initial field comprises at least one ambient power (AMP) field operable to notify the backscattering tag of the transmitting of the excitation signal on the first channel.

In some embodiments, the method may further comprise receiving, by the receiver, the backscattered signal on the second channel; and responsive to receiving the backscattered signal, sending, by the receiver, a response on at least one of the first channel and the second channel to indicate successful receipt of the backscattered signal to the transmitter.

In some embodiments, the method may further comprise sending, by the receiver, a response on at least one of the first channel and the second channel to indicate non-successful receipt of the backscattered signal to the transmitter after failure to successfully receive the backscattered signal within a period indicated by the communication frame.

In some embodiments, the communication frame is a trigger frame response transmitted in response to receiving a trigger frame transmitted by the receiver.

In another broad aspect there is provided a system for backscatter communication comprising: a transmitter configured to: transmit a communication frame on at least one of a first channel and a second channel, the communication frame comprising timing data indicating a transmission time and a duration of an excitation signal to be transmitted by the transmitter on the first channel; and transmit the excitation signal on the first channel; a receiver configured to: receive a communication frame; wherein at least one of the transmitter and the receiver is configured to protect access to the first channel and the second channel for a protection period corresponding to the transmission time and the duration of the excitation signal; and a backscattering tag configured to: backscatter the excitation signal to generate a backscattered signal, the backscattered signal transmitted on the second channel.

In some embodiments, the transmitter and the receiver each are further configured to sense both the first channel and the second channel simultaneously.

In some embodiments, the first channel and the second channel occupy non-overlapping portions of a CBW40 channel.

In some embodiments, the first channel and the second channel are each a 20 MHz channel.

In some embodiments, the transmitter is further configured to protect access to the first channel for the protection period by transmitting a first CTS-to-self packet on the first channel and to protect access to the second channel for the protection period by transmitting a second CTS-to-self packet on the second channel.

In some embodiments, the first CTS-to-self packet comprises a first TXOP duration and the second CTS-to-self packet comprises a second TXOP duration, the first TXOP duration and the second TXOP duration being the same.

In some embodiments, the transmitter is further configured to transmit on the first channel and the second channel, a preamble and at least one initial field after transmitting the first CTS-to-self packet and the second CTS-to-self packet.

In some embodiments, the at least one initial field comprises at least one ambient power (AMP) field operable to notify the backscattering tag of the transmitting of the excitation signal on the first channel.

In some embodiments, the receiver is further configured to receive the backscattered signal on the second channel; and responsive to receiving the backscattered signal, send a response on at least one of the first channel and the second channel to indicate successful receipt of the backscattered signal to the transmitter.

In some embodiments, the receiver is further configured to send a response on at least one of the first channel and the second channel to indicate non-successful receipt of the backscattered signal to the transmitter after failure to successfully receive the backscattered signal within a period indicated by the communication frame.

In some embodiments, the communication frame is a trigger frame response transmitted in response to receiving a trigger frame transmitted by the receiver.

Other features and advantages of the present application will become apparent from the following detailed description. It should be understood, however, that the detailed description and the specific examples, while indicating embodiments of the application, are given by way of illustration only and the scope of the claims should not be limited by these embodiments, but should be given the broadest interpretation consistent with the description as a whole.

### BRIEF DESCRIPTION OF THE DRAWINGS

For a better understanding of the embodiments described herein and to show more clearly how they may be carried into effect, reference will now be made, by way of example only, to the accompanying drawings which show at least one exemplary embodiment, and in which:
FIG. 1 is a schematic diagram of a backscatter communication system, in accordance with an example embodiment;
FIG. 2 is a schematic diagram of an example backscatter communication scenario;
FIG. 3 is a simplified schematic diagram of a backscatter communication scenario, in accordance with an example embodiment;
FIG. 4 is a process flow for an example embodiment of a method for two-channel protection during backscatter communication;
FIG. 5 is a schematic diagram of a backscatter communication scenario implemented using the method of FIG. 4;
FIG. 6 is a schematic diagram of a backscatter communication scenario in accordance with another example embodiment;
FIG. 7 is a schematic diagram of a backscatter communication scenario in accordance with another example embodiment;
FIG. 8 is a process flow for another example embodiment of a method for two-channel protection during backscatter communication;
FIG. 9 is a schematic diagram of a backscatter communication scenario implemented using the method of FIG. 8;
FIG. 10 is a schematic diagram of a backscatter communication scenario implemented using the method of FIG. 4, in accordance with another example embodiment;
FIG. 11 is a schematic diagram of a backscatter communication scenario implemented using the method of FIG. 4, in accordance with another example embodiment;
FIG. 12 is a process flow for another example embodiment of a method for two-channel protection during backscatter communication;
FIG. 13 is a schematic diagram of a backscatter communication scenario implemented using the method of FIG. 12;
FIG. 14 is a schematic diagram of another backscatter communication scenario implemented using the method of FIG. 12;
FIGS. 15A-15C are frequency spectrum plots of example excitation signal and backscattered signal bandwidths and relative channel positioning, in accordance with one or more embodiments;
FIG. 16A is a process flow for another example embodiment of a method for channel protection during backscatter communication;
FIG. 16B is a schematic diagram of a backscatter communication scenario implemented using the method of FIG. 16A, in accordance with an example embodiment;
FIG. 16C is a schematic diagram of a backscatter communication scenario implemented using the method of FIG. 16A, in accordance with another example embodiment;
FIG. 17A is a process flow for another example embodiment of a method for channel protection during backscatter communication;
FIG. 17B is a schematic diagram of a backscatter communication scenario implemented using the method of FIG. 17A, in accordance with another example embodiment; and
FIG. 18A is a schematic diagram of a backscatter communication scenario implemented using the method of FIG. 16A, in accordance with another example embodiment.
FIG. 18B is a schematic diagram of a backscatter communication scenario implemented using the method of FIG. 16A, in accordance with another example embodiment.

Further aspects and features of the example embodiments described herein will appear from the following description taken together with the accompanying drawings.

### DESCRIPTION OF VARIOUS EMBODIMENTS

It will be appreciated that, for simplicity and clarity of illustration, where considered appropriate, reference numerals may be repeated among the figures to indicate corresponding or analogous elements or steps. In addition, numerous specific details are set forth in order to provide a thorough understanding of the example embodiments described herein. However, it will be understood by those of ordinary skill in the art that the embodiments described herein may be practiced without these specific details. In other instances, well-known methods, procedures and components have not been described in detail so as not to obscure the embodiments described herein. Furthermore, this description is not to be considered as limiting the scope of the embodiments described herein in any way but rather as merely describing the implementation of the various embodiments described herein.

The terms "an embodiment," "embodiment," "embodiments," "the embodiment," "the embodiments," "one or more embodiments," "some embodiments," and "one embodiment" mean "one or more (but not all) embodiments of the present invention(s)," unless expressly specified otherwise.

The terms "including," "comprising" and variations thereof mean "including but not limited to," unless expressly specified otherwise. A listing of items does not imply that any or all of the items are mutually exclusive, unless expressly specified otherwise. The terms "a," "an" and "the" mean "one or more," unless expressly specified otherwise.

As used herein and in the claims, two or more parts are said to be "coupled", "connected", "attached", or "fastened" where the parts are joined or operate together either directly or indirectly (i.e., through one or more intermediate parts), so long as a link occurs. As used herein and in the claims, two or more parts are said to be "directly coupled", "directly connected", "directly attached", or "directly fastened" where the parts are connected in physical contact with each other. As used herein, two or more parts are said to be "rigidly coupled", "rigidly connected", "rigidly attached", or "rigidly fastened" where the parts are coupled so as to move as one while maintaining a constant orientation relative to each other. None of the terms "coupled", "connected", "attached", and "fastened" distinguish the manner in which two or more parts are joined together.

It should be noted that terms of degree such as "substantially", "about" and "approximately" when used herein mean a reasonable amount of deviation of the modified term such that the end result is not significantly changed. These terms of degree should be construed as including a deviation of the modified term if this deviation would not negate the meaning of the term it modifies.

In addition, as used herein, the wording "and/or" is intended to represent an inclusive-or. That is, "X and/or Y" is intended to mean X or Y or both, for example. As a further example, "X, Y, and/or Z" is intended to mean X or Y or Z or any combination thereof.

Further, although method steps may be described (in the disclosure and / or in the claims) in a sequential order, such methods may be configured to work in alternate orders. In other words, any sequence or order of steps that may be described does not necessarily indicate a requirement that the steps be performed in that order. The steps of methods described herein may be performed in any order that is practical. Further, some steps may be performed simultaneously.

As used herein and in the claims, a group of elements are said to "collectively" perform an act where that act is performed by any one of the elements in the group, or performed cooperatively by two or more (or all) elements in the group.

Some elements herein may be identified by a part number, which is composed of a base number followed by an alphabetical or subscript-numerical suffix (e.g. 112a, or 112₁). Multiple elements herein may be identified by part numbers that share a base number in common and that differ by their suffixes (e.g. 112₁, 112₂, and 112₃). All elements with a common base number may be referred to collectively or generically using the base number without a suffix (e.g. 112).

As used herein, a "communication frame" may be any frame exchanged between devices in the backscatter communication process. For example, a communication frame may be a frame transmitted by an initiator or transmitter to begin or configure the backscatter sequence (e.g., a frame sometimes referred to as a "first frame"). A communication frame may also be a frame transmitted in response to another frame, such as an initial control frame response (ICR) transmitted in response to a trigger frame or an initial control frame (ICF). A communication frame may convey any information such as timing information, configuration information, triggering information, or control information used to coordinate excitation, protection, or backscatter reception operations.

The embodiments herein reference communication via IEEE 802.11 compliant signals. One or more of the described embodiments may provide compliance with current or future versions of IEEE 802.11 standards. However, the described embodiments are not so limited and the disclosed backscatter communication systems and methods may operate with other similar communication standards.

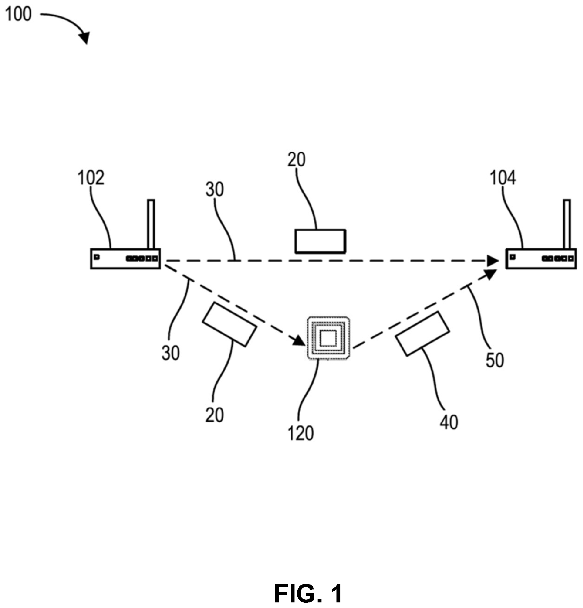

Reference is now made to FIG. 1, which is a schematic diagram of a backscatter communication system 100, in accordance with an example embodiment. System 100 includes a transmitter 102, a receiver 104 and a backscattering tag 120.

Transmitter 102 may be configured to transmit a signal 30 that includes one or more transmitted data frames 20. Transmitter 102 may transmit data frames 20 at a pre-defined or controllable frequency. To this end, transmitter 102 may also be referred to herein as an "initiator" or an "excitation device", and transmitted signal 30 may also be referred to herein as an "excitation signal". In some embodiments, transmitter 102 may include multiple radios configured to transmit signals on different frequency channels.

In some embodiments, transmitted signal 30 may be an IEEE802.11 compliant WLAN signal and transmitted data frames 20 may be IEEE802.11 compliant WLAN data frames. In other embodiments, transmitted signal 30 may be compliant with a different communication standard.

Receiver 104 may be any suitable device configured to receive transmitted signal 30. Receiver 104 may be operable at multiple frequencies, including the frequency of transmitted signal 30. Receiver 104 may operate at a pre-defined frequency or may be tuned to different frequencies. In some embodiments, receiver 104 may be a device capable of receiving IEEE802.11 compliant WLAN signals. In other embodiments, receiver 104 may be capable of receiving signals compliant with a different communication standard.

Backscattering tag 120 may be any suitable device that operates to intercept transmitted data frames 20. In particular, backscattering tag 120 may be configured to manipulate the intercepted frames so as to encode the backscattering tag's own data. Backscattering tag 120 may backscatter transmitted signal 30 to form a backscattered signal 50 that includes one or more backscattered data frames 40. Backscattered data frames 40 may include the backscattering tag's own data.

In more detail, backscattering tag 120 may receive a transmitted data frame containing data transmitted by transmitter 102. Backscattering tag 120 may operate to manipulate the originally transmitted data to include the backscattering tag's own data in the backscattered data frame.

In some embodiments, transmitted signal 30 may be an IEEE802.11 compliant WLAN signal. In other embodiments, transmitted signal 30 may be compliant with a different communication standard.

Backscattering tag 120 may apply different methods to manipulate transmitted signal 30 (for encoding the backscattering tag data) and generate backscattered signal 50. The backscattering communication systems and methods can include, for example, the systems and methods described in United States Patent No. 10,338,205 to Zhang et al., filed August 14, 2017 and issued July 2, 2019; United States Patent No. 11,483,836 to Zhang et al., filed April 25, 2019, and issued October 25, 2022; and United States Patent No. 12,229,619 to Nielsen et al., filed Jan. 27, 2023 and issued February 18, 2025; all three of which are hereby incorporated by reference in their entirety, except for any definitions, subject matter disclaimers or disavowals, and except to the extent that the incorporated material is inconsistent with the express disclosure herein, in which case the language in this disclosure controls.

To this end, backscattering tag 120 may include various passive circuitry components that operate (i.e., manipulate) on the received signal to encode the received signal with backscattering tag 120's own data. Various architectures and configurations for the passive circuitry for backscattering tags are known in the art.

Backscattering tag 120's own data, that is encoded into backscattered data frames 40, may vary based on the application of backscatter communication system 100. For example, backscattering tag 120 may be coupled to a sensor and backscattering tag 120's own data may include sensor data generated by the sensor. In this manner, backscattering tag 120 may facilitate implementation of ultra-low-power sensor networks.

If the backscattered signal 50 is in the same frequency channel as original transmitted signal 30, the ability of receiver 104 to decode backscattered signal 50 (to recover the data encoded by backscattering tag 120) may be degraded by the interference generated by receiving signals 30 and 50 in the same frequency channel. The interference issue may be at least partially mitigated if backscattered signal 50 and original transmitted signal 30 are in different frequency channels. This can enable successful long-range backscatter communication for instances when the transmitter 102 and receiver 104 are not collocated.

Transmitter 102 may transmit data frames 20 on a first channel. Backscattering tag 120 may be configured to, in addition to encoding the backscattering tag's own data into the backscattered data frame, frequency shift backscattered signal 50 onto a different frequency. In this manner, backscattering tag 120 can generate a backscattered signal 50 on a second channel. Receiver 104 may be tuned to the second channel to receive backscattered frames 40. In some embodiments, receiver 104 may include multiple radios. For example, a first radio of receiver 104 may be tuned to the first channel to receive data frames 20 from transmitter 102. A second radio of receiver 104 may be tuned to the second channel to receive backscattered frames 40 from backscattering tag 120. The first channel may be referred to as the downlink (DL) channel and the second channel may be referred to as the uplink (UL) channel.

When the original transmitted signal 30 and the backscattered signal 50 are on two different channels, there is a need to protect the transmission on both channels. For example, both the transmitted data frames 20 on the first channel and the backscattered frames 40 on the second channel may have to be protected to enable successful backscatter communication.

In some embodiments, both channels may be random access channels. Transmitter 102 may perform carrier sense before transmission and start its transmission with a preamble on the first channel. This can provide some protection to the transmitted data frames 20 on the first channel. However, backscattering tag 120 may passively backscatter the excitation signal to the second channel by frequency shifting during backscattering. There may not be any channel allocation performed on the second channel for the backscattered frames 40. This may cause interference for backscattered frames 40 by transmission from other devices on the second channel.

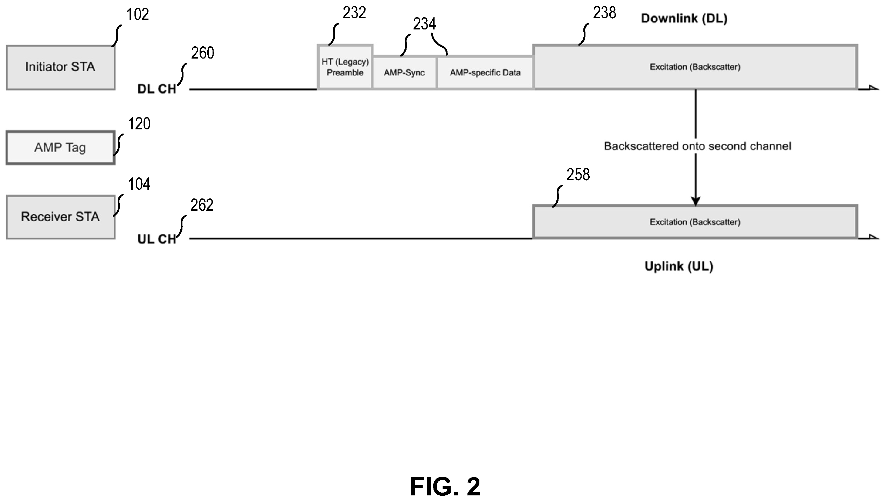

Reference is now made to FIG. 2, which is a schematic diagram of an example backscatter communication scenario. An initiator station (STA) 102 may initiate DL on a first channel 260 "DL CH" (e.g., on channel 1). An ambient power (AMP) Tag 120, during passive backscattering, may shift the excitation part of the DL 238 to a second channel 262 "UL CH" (e.g., to channel 11). The receiver 104 can receive the UL on the second channel 262 (channel 11). For successful backscatter communication, it may be required to protect both the DL and the UL frames that are being concurrently transmitted.

The disclosed embodiments can address the above-described channel protection problem by reserving two different channels for backscatter communication - a first channel for originally transmitted signal 30 and a second channel for the backscattered signal 50. The disclosed embodiments may enable the two-channel protection using a control frame (CF) transmitted by transmitter 102. The CF can enable transmitter 102 to communicate channel data and timing data related to the backscatter communication to receiver 104. Further, each of transmitter 102 and receiver 104 can protect one channel for a period corresponding to the timing data. The CF can enable successful backscatter communication within the communication infrastructure with small overhead related to synchronization of transmission opportunity (TXOP) on the two channels.

In some embodiments, the disclosed systems and methods may utilize a response control frame (CFR) (also referred to herein as "control frame response") sent by receiver 104 to transmitter 102. The CFR can provide an indication of successful/unsuccessful receipt of the backscattered signal at receiver 104. The CFR can enable transmitter 102 to retry in response to unsuccessful receipt.

In some embodiments, non-adjacent channels may be utilized for the UL and DL channels. This may enable reduction in interference between the originally transmitted signal and the backscattered signal. For an example communication in the 2.4 GHz spectrum, channel 1 may be utilized as the UL channel and channel 11 may be utilized as the DL channel. In other embodiments, any two channels (including adjacent channels) may be utilized, for example, based on channel availability.

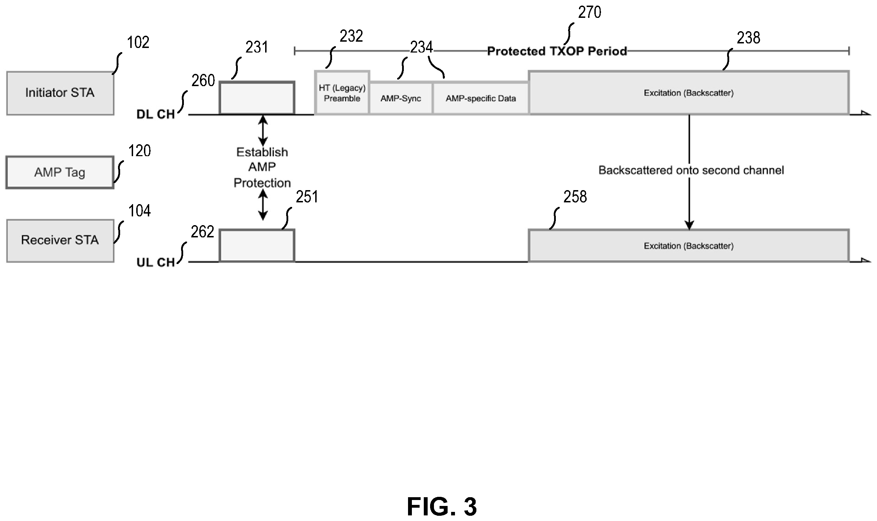

Reference is now made to FIG. 3, which is a simplified schematic diagram of a backscatter communication scenario, in accordance with an example embodiment. An initiator STA 102 may initiate DL on a first channel 260 "DL CH" (e.g., on channel 1). The excitation field may be preceded by a HT (Legacy) Preamble 232 and some AMP-specific fields 234. An AMP Tag 120, during passive backscattering, may shift the excitation part of the DL 238 to a second channel "UL CH" 262 (e.g., to channel 11). The receiver 104 can receive the UL on the second channel 262 (channel 11). For successful backscatter communication, the protection mechanism may be required to establish TXOP 270 starting before the preamble and extending until at least the end of the excitation field.

The disclosed embodiments can enable two-channel protection (e.g., channels 1 and 11) using a CF sent by the initiator to synchronize protection of both channels. The initiator may protect a first channel by sending a Clear to Send-to-Self (CTS-to-Self) 231 on the first channel. The receiver may protect a second channel by sending a CTS-to-Self 251 on the second channel.

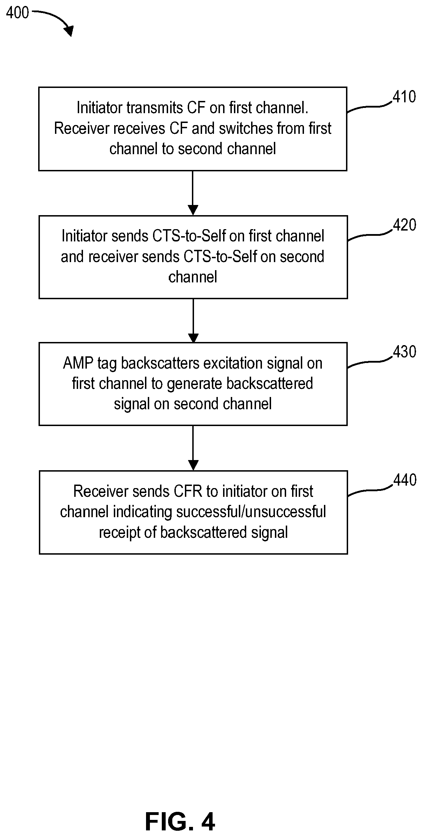

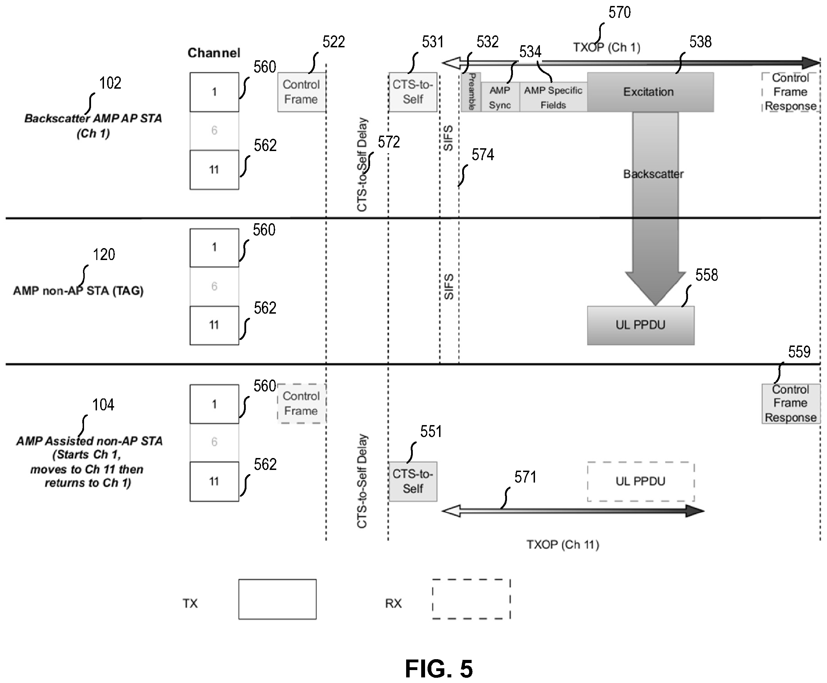

Reference is now made to FIGS. 4 and 5. FIG. 4 is a process flow for an example embodiment of a method 400 for two-channel protection during backscatter communication. FIG. 5 is a schematic diagram of a backscatter communication scenario implemented using method 400. Method 400 may be performed, for example, by backscatter communication system 100 shown in FIG. 1 and concurrent reference is made herein below to components shown in FIG. 1.

At act 410, the receiver and the initiator may both be on the same channel (e.g., the first channel). In the illustrated example, the first channel 560 is channel 1. The initiator 102 may transmit a CF 522 that includes channel data corresponding to the second channel 562 and timing data indicating a transmission time and a duration of the excitation field. The timing data may indicate, for example, the duration (Dur_to_CTS) between the CF 522 and a CTS-to-Self 531 to be sent by the initiator 102 on the first channel 560. The timing data may further indicate the TXOP duration 570. The TXOP duration may be sufficiently long to at least protect the duration of the excitation field. The receiver 104 may receive the CF 522 on the first channel 560 and in response to the CF 522, switch from the first channel 560 to the second channel 562. In the illustrated example, the second channel 562 is channel 11.

At act 420, a CTS-to-Self delay 572 after the CF, (i.e., a duration of Dur_to_CTS after the CF), the initiator may send a CTS-to-Self 531 on the first channel and the receiver may send a CTS-to-Self 551 on the second channel. The two CTS-to-Self can set corresponding TXOPs on the first channel and the second channel. After sending a CTS-to-Self, the initiator may start AMP transmission after a SIFS delay 574. This transmission may start with a preamble 532 and may be followed by one or more initial fields 534 to notify the AMP tag of upcoming backscattering excitation signal 538.

In some embodiments, the initiator may wait for a CFR 559 from the receiver indicating successful/unsuccessful receipt of the backscattered signal 558. For the first channel, the duration from the start of the SIFS until the end of the CFR may be protected by the TXOP advertised in the CTS-to-Self transmitted by the initiator.

At act 430, an AMP tag 120 may receive the AMP frame and prepare to backscatter the excitation signal. In some embodiments, the AMP frame may include an address field used to address backscattering tags. An AMP tag may backscatter the excitation signal 538 in response to the AMP frame including the address for that AMP tag. The AMP tag may backscatter the excitation signal on the first channel to generate a backscattered signal 558 on the second channel. In the illustrated example, the AMP tag may backscatter the excitation signal from channel 1 to generate a backscattered signal on channel 11.

At act 440, the receiver may wait at least for the TXOP duration on the second channel 571 to receive the backscattered signal. If the backscattered signal is successfully received during this period, the receiver may switch to the first channel and send a CFR to the initiator on the first channel. The CFR can indicate successful receipt of the backscattered signal to the initiator. If the backscattered signal is not successfully received during this period, the receiver may switch to the first channel and send a CFR to the initiator on the first channel. The CFR can indicate unsuccessful receipt of the backscattered signal to the initiator.

In some embodiments, the receiver may include additional data in the CFR. The additional data may include any suitable data to be provided to the initiator, for example, channel occupancy statistics for the first channel, backscattering tag data received via the backscattered signal, etc.

In some embodiments, the excitation signal may include multiple frame sequences for backscattering. The multiple frame sequences may be advertised using a single CF from the initiator to the receiver. In some instances, each of the multiple frames may include different data fields. In some instances, two or more of the multiple frames may include identical data fields. This may provide redundancy to protect against data loss during backscatter communication.

In some embodiments, the multiple frame sequences of the excitation signal may be addressed to different backscattering tags. Each backscattering tag may backscatter the excitation frame sequence addressed to that backscattering tag to generate the backscattered frame sequences.

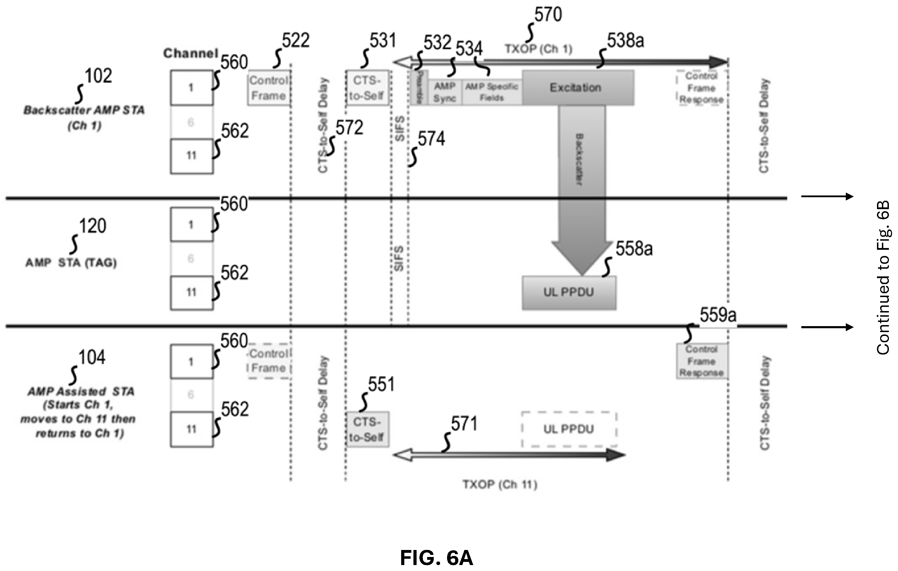

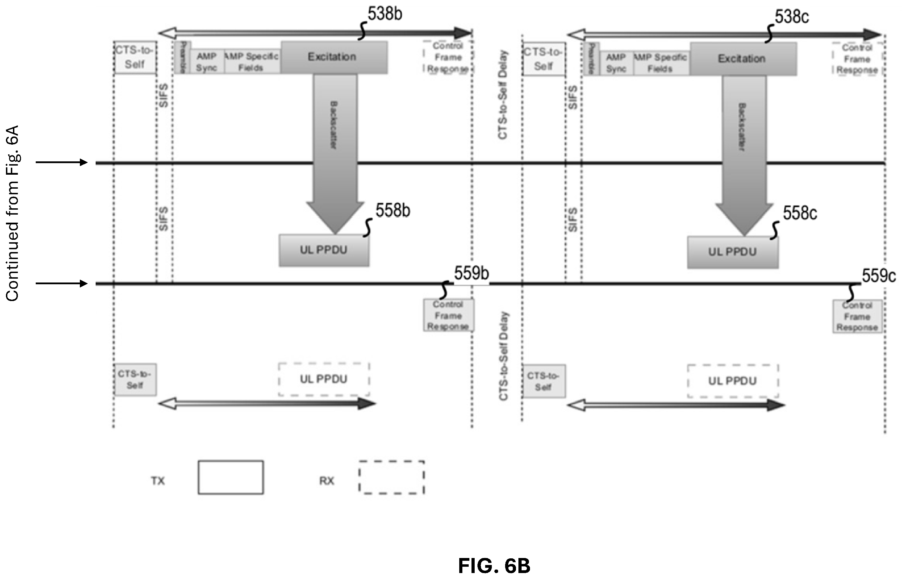

In some embodiments, the multiple frame sequences included in the excitation signal may be addressed to the same backscattering tag. The multiple frame sequences may be backscattered by the same backscattering tag to generate the backscattered signal. Reference is now made to FIG. 6, which is a schematic diagram of a backscatter communication scenario in accordance with an example embodiment. In the illustrated example, multiple excitation frame sequences 538a, 538b, and 538c are backscattered by the same backscattering tag to generate the backscattered frame sequences 558a, 558b, and 558c.

As described with reference to act 440 of method 400, the receiver may send a CFR indicating successful/unsuccessful receipt of the backscattered signal to the initiator. In some embodiments, the receiver may send separate CFR 559a, 559b, and 559c corresponding to each of the multiple backscattered frame sequences. For the example illustrated in FIG. 6, the receiver sends three CFR corresponding to the three illustrated backscattered frame sequences. This may enable the initiator to identify which specific frame sequences were unsuccessful. The initiator may then resend only the specific frame sequences corresponding to the unsuccessful deliveries.

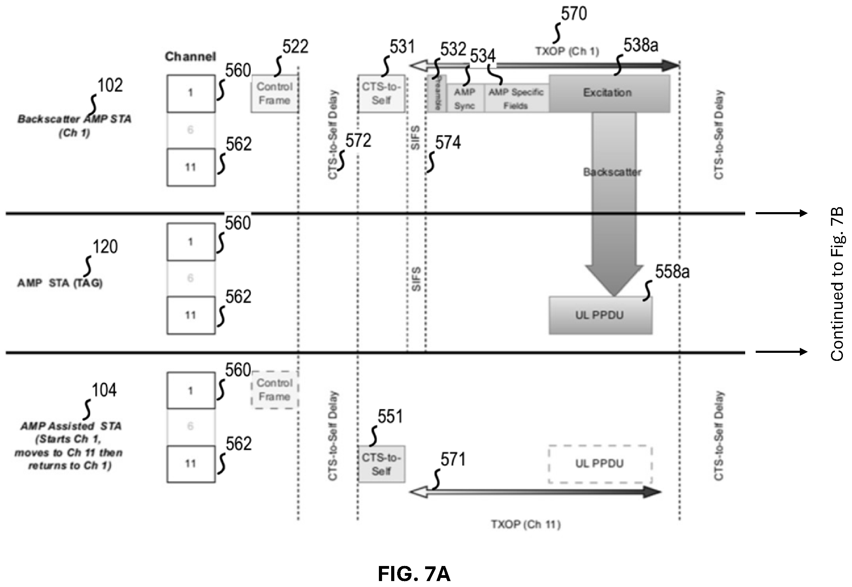

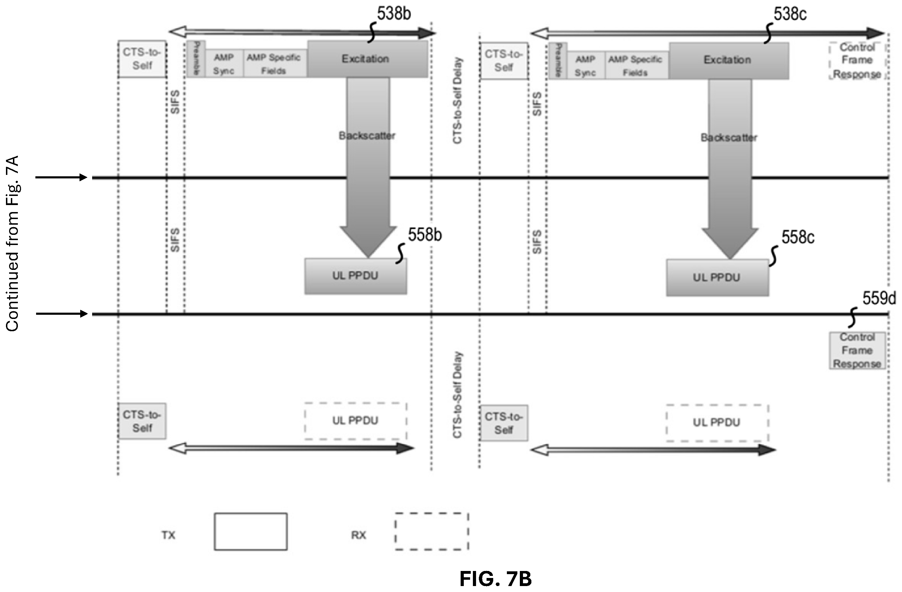

In some embodiments, the receiver may send an aggregated CFR corresponding to each of the multiple backscattered frame sequences. Reference is now made to FIG. 7, which is a schematic diagram of a backscatter communication scenario in accordance with an example embodiment. In the illustrated example, the receiver may send an aggregated CFR 559d corresponding to all of the multiple backscattered frame sequences. For the example illustrated in FIG. 7, the receiver sends a single aggregated CFR to the three illustrated backscattered frame sequences. This may increase communication speed by reducing the delay associated with sending separate CFR for each of the multiple frame sequences.

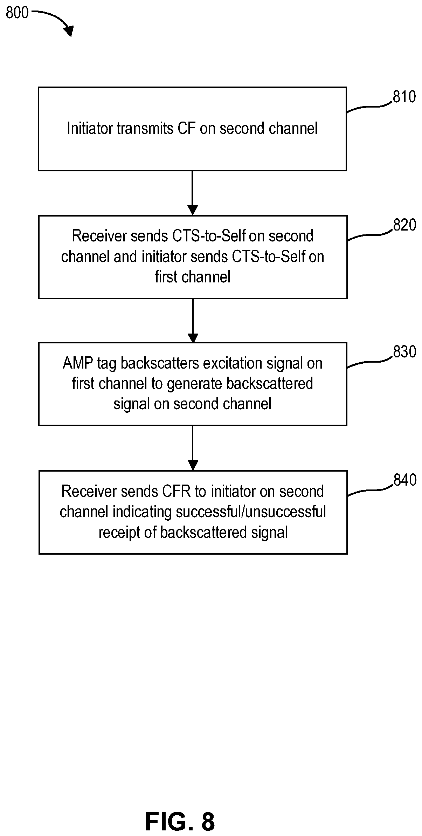

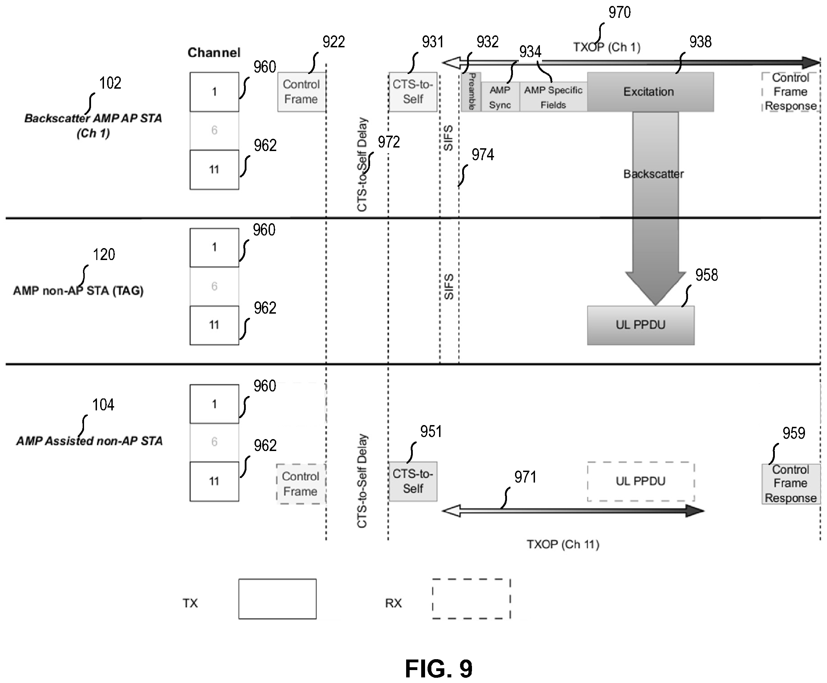

Reference is now made to FIGS. 8 and 9. FIG. 8 is a process flow for an example embodiment of a method 800 for two-channel protection during backscatter communication. FIG. 9 is a schematic diagram of a backscatter communication scenario implemented using method 800. Method 800 may be performed, for example, by backscatter communication system 100 shown in FIG. 1 and concurrent reference is made herein below to components shown in FIG. 1.

Method 800 may be performed using an initiator 102 having two radios and without requiring any channel switching by the receiver. A first initiator radio may operate on a first channel 960 (e.g., DL channel 1) and a second initiator radio may operate on a second channel 962 (e.g., UL channel 11). The receiver 104 may operate on a single channel, i.e., the second channel.

At act 810, the receiver and the initiator may both be on the second channel. In the illustrated example, the second channel is channel 11. The initiator may transmit a CF 922 that includes channel data corresponding to the first channel and timing data indicating a transmission time and a duration of the excitation field. The timing data may indicate, for example, the duration (Dur_to_CTS) between the CF and a CTS-to-Self to be sent by the receiver on the second channel and by the initiator on the first channel. The timing data may further indicate the TXOP duration. The TXOP duration may be sufficiently long to at least protect the duration of the excitation field.

At act 820, a CTS-to-Self delay 972 after the CF, (i.e., a duration of Dur_to_CTS after the CF), the receiver may send a CTS-to-Self 951 on the second channel and the initiator may send a CTS-to-Self 931 on the first channel. The two CTS-to-Self can set corresponding TXOPs 970 and 971 on the first channel and the second channel. After sending a CTS-to-Self, the initiator may start AMP transmission after a SIFS delay 974. This transmission may start with a preamble 932 and may be followed by one or more initial fields 934 to notify the AMP tag of upcoming backscattering excitation signal 938. In some embodiments, the initiator can optimize by delaying the excitation signal with some padding added to the AMP-specific fields in case of delayed CTS-to-Self on the first channel.

At act 830, an AMP tag 120 may backscatter the excitation signal 938 on the first channel to generate a backscattered signal 958 on the second channel. In the illustrated example, the AMP tag 120 may backscatter the excitation signal 938 from channel 1 to generate a backscattered signal 958 on channel 11.

At act 840, the receiver may wait at least for the TXOP duration 971 to receive the backscattered signal. If the backscattered signal is successfully received during this period, the receiver may send a CFR 959 to the initiator on the second channel. The CFR can indicate successful receipt of the backscattered signal to the initiator. If the backscattered signal is not successfully received during this period, the receiver may send a CFR to the initiator on the second channel. The CFR can indicate unsuccessful receipt of the backscattered signal to the initiator.

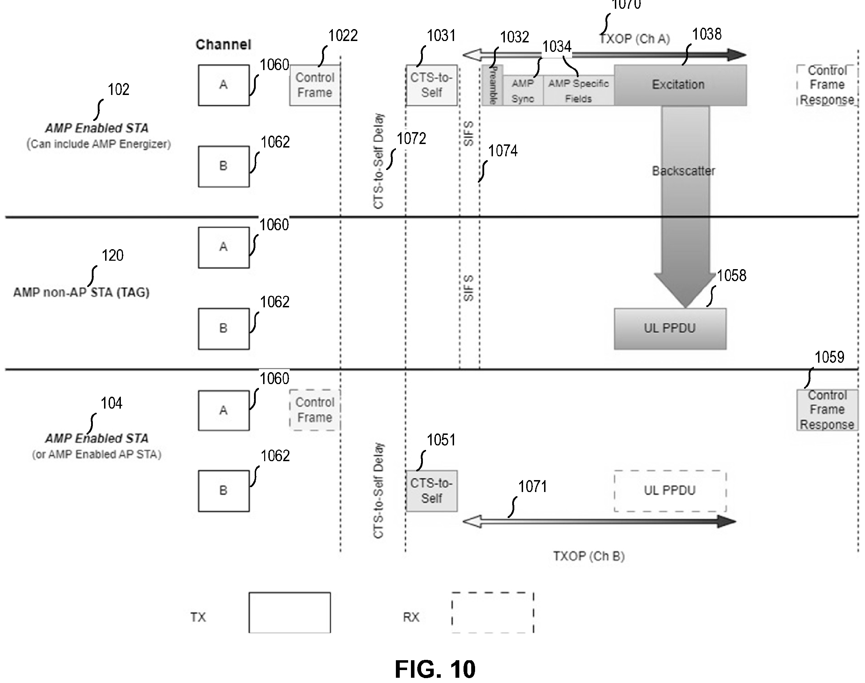

Reference is now made to FIGS. 4 and 10. FIG. 10 is a schematic diagram of a backscatter communication scenario implemented using method 400, in accordance with another example embodiment. Method 400 may be performed, for example, by backscatter communication system 100 shown in FIG. 1 and concurrent reference is made herein below to components shown in FIG. 1.

At act 410, the receiver and the initiator may both be on the same channel (e.g., the first channel). In the illustrated example, the first channel 1060 is channel A. The initiator may transmit a CF 1022 that includes channel data corresponding to the second channel and timing data indicating a transmission time and a duration of the excitation field. The receiver may receive the CF on the first channel and in response to the CF, switch from the first channel 1060 to the second channel 1062. In the illustrated example, the second channel 1062 is channel B.

The timing data included in the CF may indicate, for example, the CTS-to-Self Delay 1072 between the CF and a CTS-to-Self 1031 to be sent by the initiator on the first channel. The timing data may further indicate the TXOP duration 1070. In the illustrated example, the end of the TXOP approximately coincides with the end of the excitation field, i.e., the TXOP duration may be selected to be just long enough to enable channel protection for the entire duration of the excitation field. For example, the TXOP duration may be within +5% of the duration from CTS-to-Self to the end of the excitation field. Accordingly, with all else being equal, the TXOP duration in the illustrated example may be shorter compared with the TXOP duration illustrated in FIG. 5. For the example illustrated in FIG. 5, the TXOP duration extends beyond the end of the excitation field to include the CFR. However, for the example illustrated in FIG. 10, the TXOP duration does not include the CFR.

At act 420, a CTS-to-Self delay after the CF, the initiator may send a CTS-to-Self 1031 on the first channel and the receiver may send a CTS-to-Self 1051 on the second channel. The two CTS-to-Self can set corresponding TXOPs 1070 and 1071 on the first channel and the second channel. After sending a CTS-to-Self, the initiator may start AMP transmission after a SIFS delay 1074. This transmission may start with a preamble 1032 and may be followed by one or more initial fields 1034 to notify the AMP tag of upcoming backscattering excitation signal 1038. The TXOP on the first channel 1070 (e.g., TXOP (Ch A) illustrated in FIG. 10) may end at the end of the excitation field.

At act 430, an AMP tag may receive the AMP frame and prepare to backscatter the excitation signal. In some embodiments, the AMP frame may include an address field used to address backscattering tags. An AMP tag may backscatter the excitation signal 1038 in response to the AMP frame including the address for that AMP tag. The AMP tag may backscatter the excitation signal 1038 on the first channel to generate a backscattered signal 1058 on the second channel. In the illustrated example, the AMP tag may backscatter the excitation signal from channel A to generate a backscattered signal on channel B.

At act 440, the receiver may wait at least for the TXOP duration on the second channel 1071 (e.g., TXOP (Ch B) illustrated in FIG. 10) to receive the backscattered signal. If the backscattered signal is successfully received during this period, the receiver may switch to the first channel and send a CFR 1059 to the initiator on the first channel. The CFR can indicate successful receipt of the backscattered signal to the initiator. If the backscattered signal is not successfully received during this period, the receiver may switch to the first channel and send a CFR to the initiator on the first channel. The CFR can indicate unsuccessful receipt of the backscattered signal to the initiator.

Because the initiator TXOP on the first channel has already ended, the receiver may contend for the first channel and transmit the CFR in a transmission window that is separate from the transmission window containing the excitation field. This may improve the utilization efficiency of the first channel by opening up channel access for the duration between the end of the excitation field and the transmission of the CFR. This may be advantageous, for example, in scenarios where there are variations in the receiver's channel switching durations (between the first channel and the second channel).

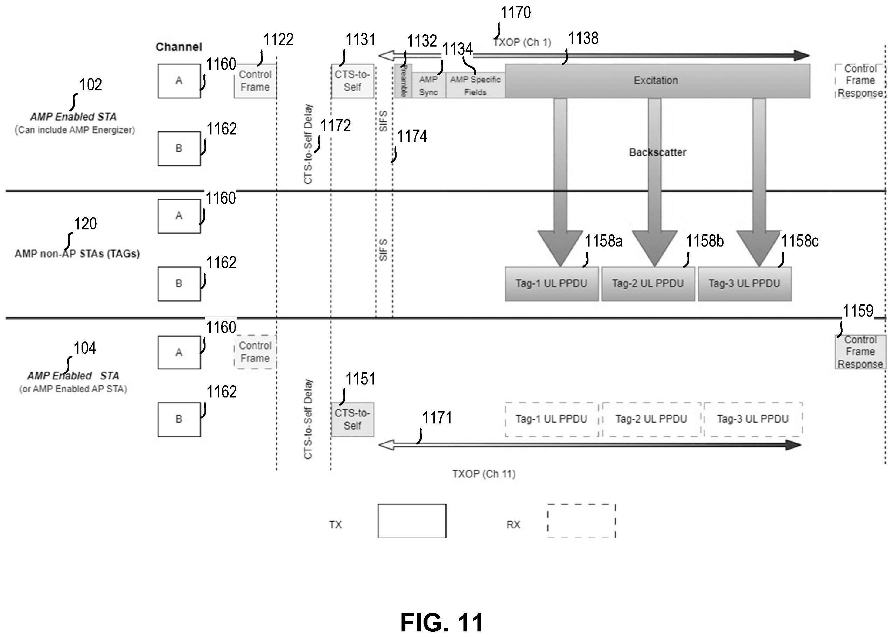

Reference is now made to FIGS. 4 and 11. FIG. 11 is a schematic diagram of a backscatter communication scenario implemented using method 400, in accordance with another example embodiment. Method 400 may be performed, for example, by backscatter communication system 100 shown in FIG. 1 and concurrent reference is made herein below to components shown in FIG. 1. In the illustrated example scenario, method 400 is implemented to support multiple uplink transmissions by multiple backscattering tags using a single excitation signal.

At act 410, the receiver and the initiator may both be on the same channel (e.g., the first channel). In the illustrated example, the first channel 1160 is channel A. The initiator may transmit a CF 1122 that includes channel data corresponding to the second channel and timing data indicating a transmission time and a duration of the excitation field. The CF may further indicate to the receiver that the backscattered signal would include signals from multiple backscattering tags 120 (e.g., Tag-1, Tag-2 and Tag-3 in the illustrated example) and the corresponding time slots/duration of the backscattered signal from the multiple backscattering tags. The receiver may receive the CF on the first channel and in response to the CF, switch from the first channel to the second channel. In the illustrated example, the second channel 1162 is channel B.

The timing data included in the CF may indicate, for example, the CTS-to-Self Delay 1172 between the CF and a CTS-to-Self to be sent by the initiator on the first channel. The timing data may further indicate the TXOP duration. In the illustrated example, the end of the TXOP approximately coincides with the end of the excitation field. In other examples, the TXOP duration may be longer, for example, to include the CFR.

At act 420, a CTS-to-Self delay after the CF, the initiator may send a CTS-to-Self 1131 on the first channel and the receiver may send a CTS-to-Self on the second channel 1151. The two CTS-to-Self can set corresponding TXOPs 1170 and 1171 on the first channel and the second channel. After sending a CTS-to-Self, the initiator may start AMP transmission after a SIFS delay 1174. This transmission or downlink (DL) sequence from the initiator may start with a preamble 1132 and may be followed by one or more initial fields 1134 (e.g., AMP Sync field, AMP Specific field) to notify the AMP tags of upcoming excitation field. The AMP specific field may include the addressing information of the multiple AMP tags (e.g., Tag-1, Tag-2 and Tag-3 in the illustrated example) designated to backscatter the excitation signal. The AMP specific field may include data indicating the corresponding start times or slots of the excitation field designated for backscattering by each of the multiple backscattering tags. This can enable the disclosed methods and systems to support a slotted Aloha-type communication that is used in the EPC Gen2 standard.

At act 430, the AMP tags may receive the excitation signal/DL sequence 1138 and prepare to backscatter the received excitation signal. As illustrated in FIG. 11, each of the addressed AMP tags may backscatter a designated portion of the excitation field (e.g., based on the start times/slots specified in the AMP-specific field) on the first channel to generate a corresponding backscattered signal/uplink sequence 1158a, 1158b, and 1158c on the second channel. In the illustrated example, the AMP tags may backscatter the excitation signal from channel A to generate a backscattered signal on channel B.

At act 440, the receiver may wait at least for the TXOP duration on the second channel 1171 to receive the backscattered signal 1158. If the backscattered signal from each of the multiple backscattering tags is successfully received during this period, the receiver may switch to the first channel and send a CFR 1159 to the initiator on the first channel. The CFR can indicate successful receipt of the backscattered signal to the initiator. If the backscattered signal is not successfully received during this period, the receiver may switch to the first channel and send a CFR to the initiator on the first channel. The CFR can indicate unsuccessful receipt of the backscattered signal to the initiator.

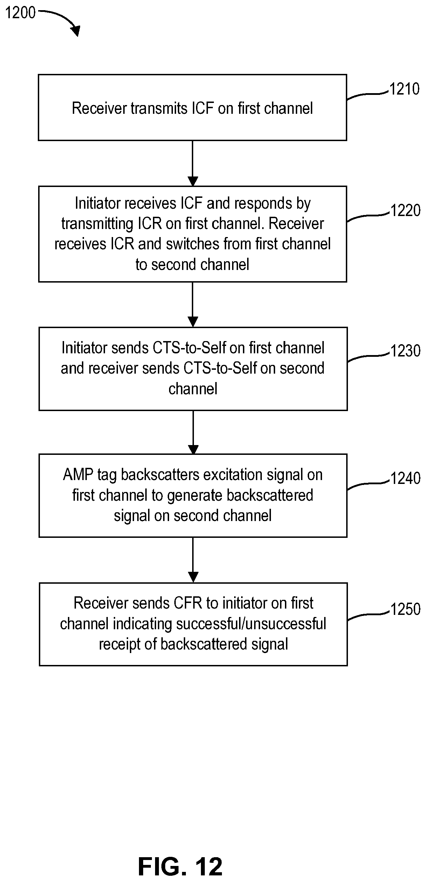

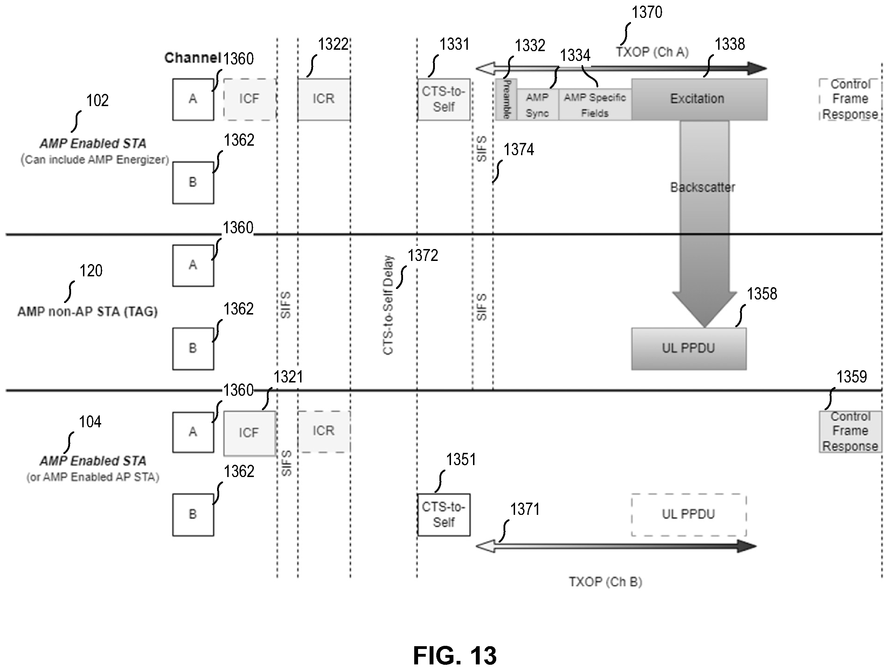

Reference is now made to FIGS. 12 and 13. FIG. 12 is a process flow for an example embodiment of a method 1200 for two-channel protection during backscatter communication. FIG. 13 is a schematic diagram of a backscatter communication scenario implemented using method 1200. Method 1200 may be performed, for example, by backscatter communication system 100 shown in FIG. 1 and concurrent reference is made herein below to components shown in FIG. 1.

As described with reference to any figures herein, the control frames and control frame responses are examples of trigger frames and trigger frame responses. A trigger frame can be used to initiate, coordinate, or otherwise control one or more operations associated with backscatter communication between the receiver, the initiator, the AMP tag, or any other system component. An example of a trigger frame is an initial control frame (ICF) transmitted by the receiver. An example of a first trigger-frame response is an initial control frame response (ICR) transmitted by the initiator. An example of a second trigger-frame response is a control frame response (CFR) transmitted by the receiver. Trigger frames and trigger-frame responses may more generally encompass frame types beyond the specific examples of an ICF, an ICR, or a CFR described herein.

At act 1210, the receiver 104 and the initiator 102 may both be on the same channel (e.g., the first channel). In the illustrated example, the first channel 1360 is channel A. The receiver may transmit an initial control frame (ICF) 1321. The ICF can trigger the initiator to transmit an excitation signal 1338 that is backscattered by a backscattering tag 120. The receiver can receive the backscattered signal. The receiver may be any suitable device. For example, the receiver may be an AMP enabled STA or an AMP enabled Access Point (AP) STA.

At act 1220, the initiator may receive the ICF transmitted at act 1210. The initiator may be any suitable device. For example, the initiator may be an AMP enabled STA. The initiator may respond to the received ICF by transmitting an initial control frame response (ICR) 1322 on the first channel.

The ICR may include channel data corresponding to a second channel and timing data indicating a transmission time and a duration of the excitation field. In the illustrated example, the second channel 1362 is channel B. The timing data may indicate, for example, a timing of a CTS-to-Self to be sent by the initiator on the first channel. The timing data may further indicate the TXOP duration. The TXOP duration may be sufficiently long to at least protect the duration of the excitation field.

The receiver may receive the ICR on the first channel and in response to the ICR, switch from the first channel to the second channel.

At act 1230, a CTS-to-Self delay 1372 after the ICR, the initiator may send a CTS-to-Self 1331 on the first channel and the receiver may send a CTS-to-Self 1351 on the second channel. The two CTS-to-Self can set corresponding TXOPs 1370 and 1371 on the first channel and the second channel. After sending a CTS-to-Self, the initiator may start AMP transmission after a SIFS delay 1374. This transmission may start with a preamble 1332 and may be followed by one or more initial fields 1334 to notify the AMP tag of upcoming backscattering excitation signal 1338.

In the illustrated example, the end of the TXOP on the first channel 1370 approximately coincides with the end of the excitation field, i.e., the TXOP duration may be selected to be just long enough to enable channel protection for the entire duration of the excitation field. For example, the TXOP duration may be within +5% of the duration from CTS-to-Self to the end of the excitation field. In other examples, the TXOP duration may be longer. For example, the TXOP duration may extend beyond the end of the excitation field to include the time duration for receiving a CFR 1359 from the receiver (indicating successful/unsuccessful receipt of the backscattered signal).

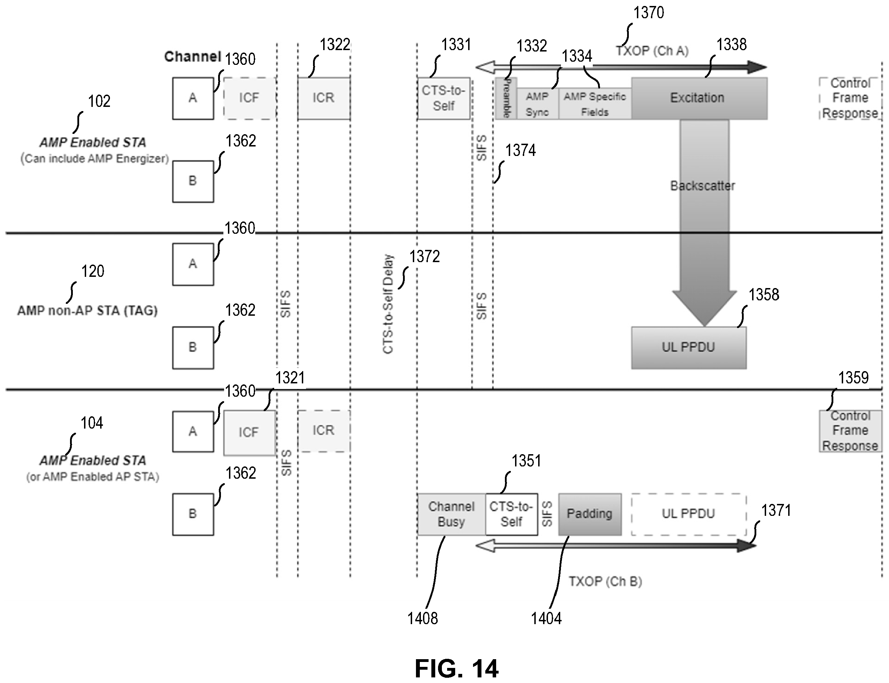

In some embodiments, the receiver may transmit a null data packet (NDP) physical layer protocol data unit (PPDU) or padding frame after sending the CTS-to-Self to keep the second channel busy. Reference is now additionally made to FIG. 14. FIG. 14 is a schematic diagram of another backscatter communication scenario implemented using method 1200. In the example illustrated in FIG. 14, the receiver transmits a padding frame 1404 to keep channel B busy while waiting for the backscattered signal.

In some instances, the CTS-to-Self by the receiver may be delayed because the second channel is busy. In the example illustrated in FIG. 14, the CTS-to-Self by the receiver is delayed (compared with the example illustrated in FIG. 13) because of a busy period 1408 of channel B.

At act 1240, an AMP tag may receive the AMP frame and prepare to backscatter the excitation signal. In some embodiments, the AMP frame may include an address field used to address backscattering tags. An AMP tag may backscatter the excitation signal in response to the AMP frame including the address for that AMP tag. The AMP tag may backscatter the excitation signal 1338 on the first channel to generate a backscattered signal 1358 on the second channel. In the illustrated example, the AMP tag may backscatter the excitation signal from channel A to generate a backscattered signal on channel B.

At act 1250, the receiver may wait at least for the TXOP duration on the second channel 1371 to receive the backscattered signal. If the backscattered signal is successfully received during this period, the receiver may switch to the first channel and send a CFR 1359 to the initiator on the first channel. The CFR can indicate successful receipt of the backscattered signal to the initiator. If the backscattered signal is not successfully received during this period, the receiver may switch to the first channel and send a CFR to the initiator on the first channel. The CFR can indicate unsuccessful receipt of the backscattered signal to the initiator.

In some embodiments, the receiver may include additional data in the CFR. The additional data may include any suitable data to be provided to the initiator, for example, channel occupancy statistics for the first channel, backscattering tag data received via the backscattered signal, etc.

In some embodiments, the excitation signal may include multiple frame sequences for backscattering. In some instances, each of the multiple frames may include different data fields. In some instances, two or more of the multiple frames may include identical data fields. This may provide redundancy to protect against data loss during backscatter communication. As described herein above with reference to FIGS. 6 and 7, the receiver may send an aggregated CFR or separate CFR corresponding to the multiple backscattered frame sequences.

In some embodiments, the multiple frame sequences of the excitation signal may be addressed to different backscattering tags. Each backscattering tag may backscatter the excitation frame sequence addressed to that backscattering tag to generate the backscattered frame sequences.

In some embodiments, the multiple frame sequences included in the excitation signal may be addressed to the same backscattering tag. The multiple frame sequences may be backscattered by the same backscattering tag to generate the backscattered signal.

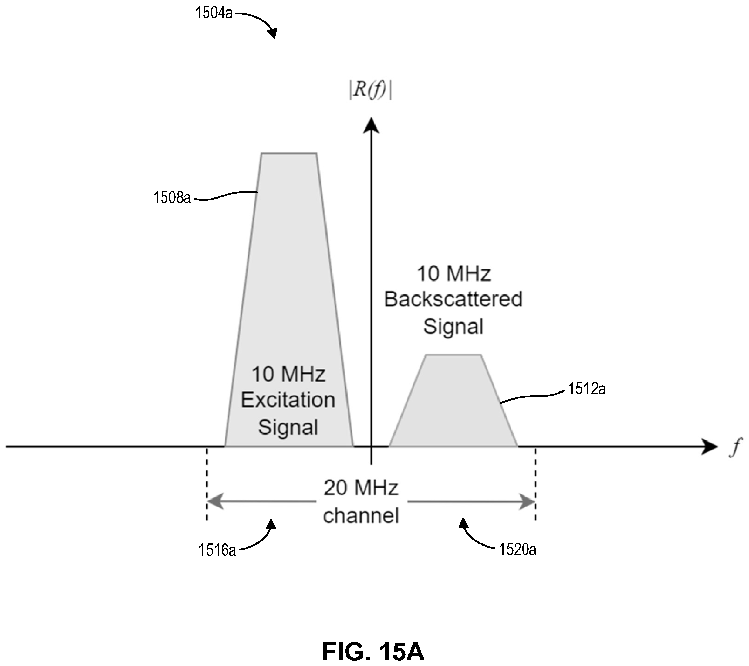

Any suitable frequency and bandwidth may be used for the excitation signal and the backscattered signal. For example, FIGS. 15A-15C show frequency spectrum plots of three examples of excitation signal and backscattered signal bandwidths and relative channel positioning. In one example, the excitation signal may be approximately 10.3 MHz. The bandwidth of the backscattered signal may be a function of the bandwidth of the excitation signal. For example, the bandwidth of the backscattered signal may be a percentage (e.g., 90%) of the bandwidth of the excitation signal. The bandwidth of the backscattered signal may also depend on parameters of the modulation scheme such as modulation rate. Other qualities of the backscattered signal (e.g., spectral shape) may be functions of the qualities of the excitation signal.

FIG. 15A shows a frequency spectrum plot 1504a for an example 10MHz excitation signal 1508a and an example 10MHz backscattered signal 1512a. In the illustrated example, excitation signal 1508a occupies a first portion 1516a of a 20MHz channel. Backscattered signal 1512a is adjacent to excitation signal 1508a and occupies a second portion 1520a of the same 20MHz channel.

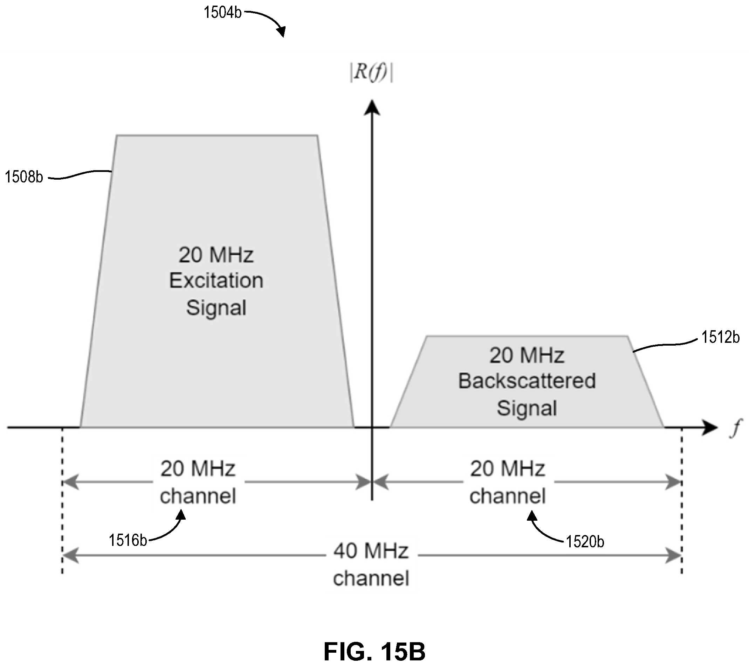

FIG. 15B shows a frequency spectrum plot 1504b for an example 20MHz excitation signal 1508b and an example 20MHz backscattered signal 1512b. In the illustrated example, excitation signal 1508b and backscattered signal 1512b occupy adjacent 20MHz channels 1516b and 1520b respectively. In such instances, the initiator and the receiver may both operate in the CBW40 mode defined in the IEEE 802.11 standard. The CBW40 mode can enable each of the initiator and the receiver to sense both 20MHz channels 1516b and 1520b simultaneously. In some embodiments, the CBW40 mode may be the high throughput HT40 mode.

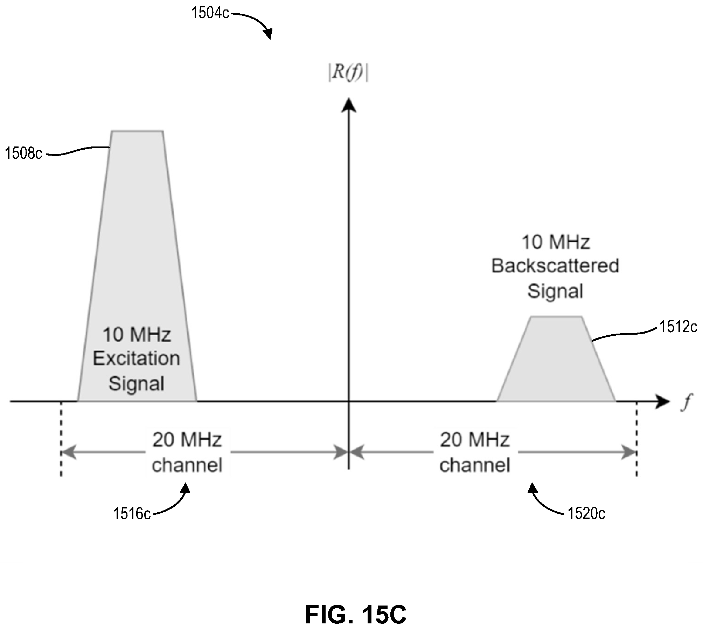

FIG. 15C shows a frequency spectrum plot 1504c for an example 10MHz excitation signal 1508c and an example 10MHz backscattered signal 1512c. In the illustrated example, excitation signal 1508c occupies a 10MHz portion of a 20MHz channel 1516c. Backscattered signal 1512a occupies a 10MHz portion of an adjacent 20MHz channel 1520c. As illustrated in FIG. 15C, excitation signal 1508c and backscattered signal 1512c may have a 20MHz separation. In such instances, the initiator and the receiver may both operate in the CBW40 mode defined in the IEEE 802.11 standard. The CBW40 mode can enable each of the initiator and the receiver to sense both 20MHz channels 1516c and 1520c simultaneously. The excitation signal 1508c and backscattered signal 1512c can be at the opposite ends of the CBW40 40MHz channel. In some embodiments, the CBW40 mode may be the high throughput HT40 mode.

The backscatter communication scenarios implemented using the disclosed methods (e.g., method 400, method 800 and method 1200) can be suitably modified for the example excitation signal and backscattered signal bandwidths and relative channel positioning illustrated in FIGS. 15A-15C, or any other signal bandwidth and relative channel positioning. For example, the backscatter communication scenario shown in FIG. 13 (implemented using method 1200) may be modified as described herein below. In other examples, any of the other backscatter communication scenarios (implemented using method 400, method 800 or method 1200) described herein may be modified in a similar manner.

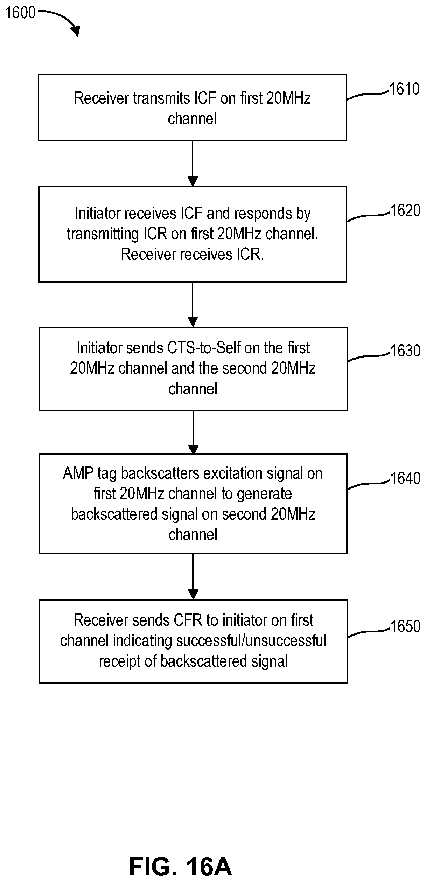

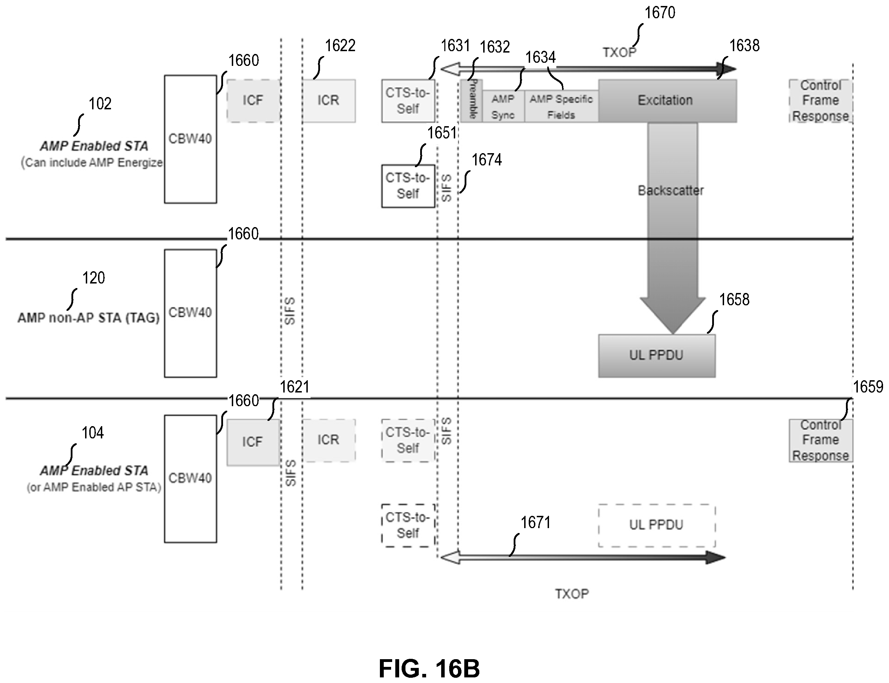

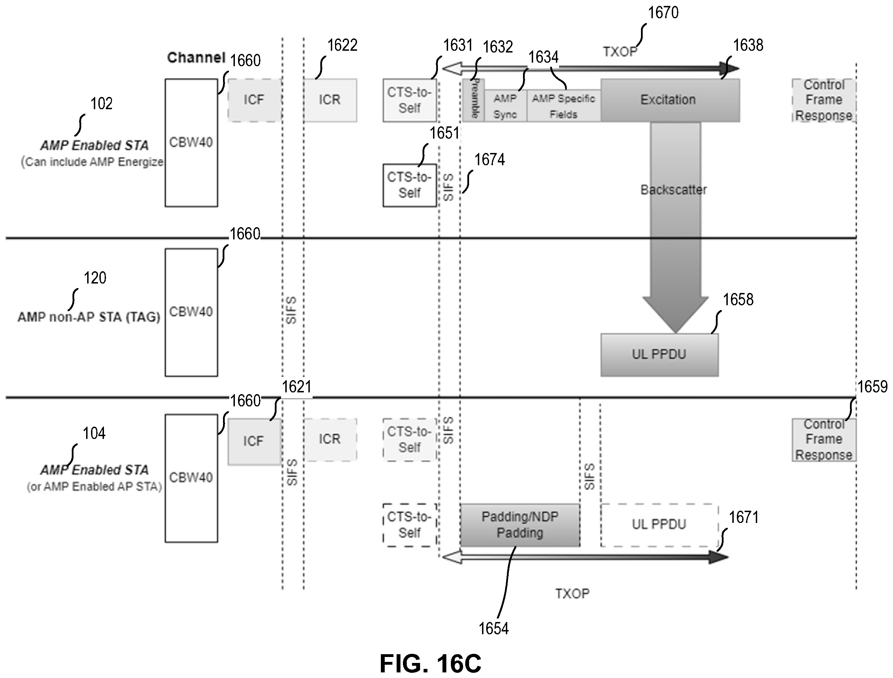

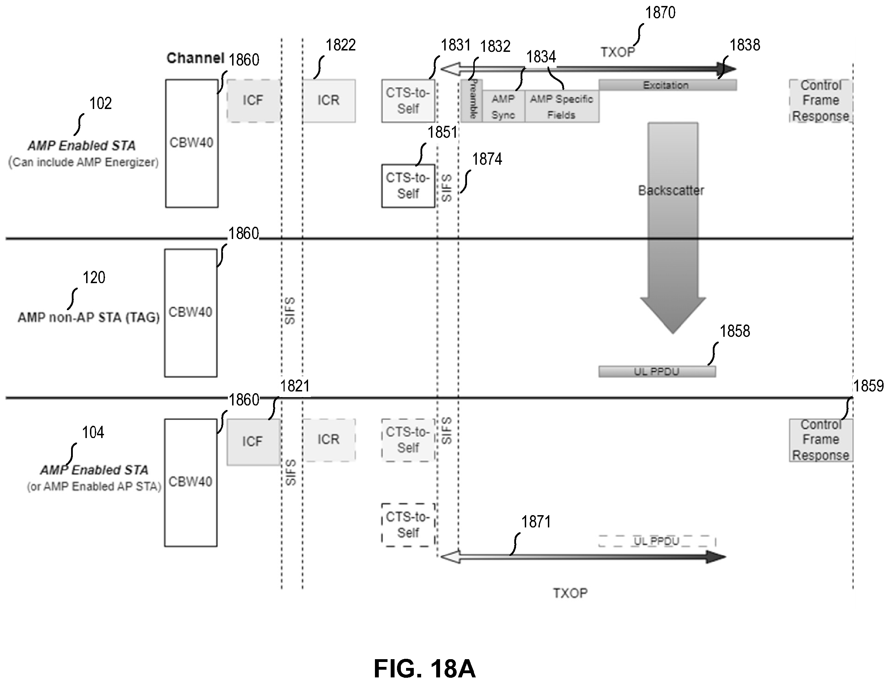

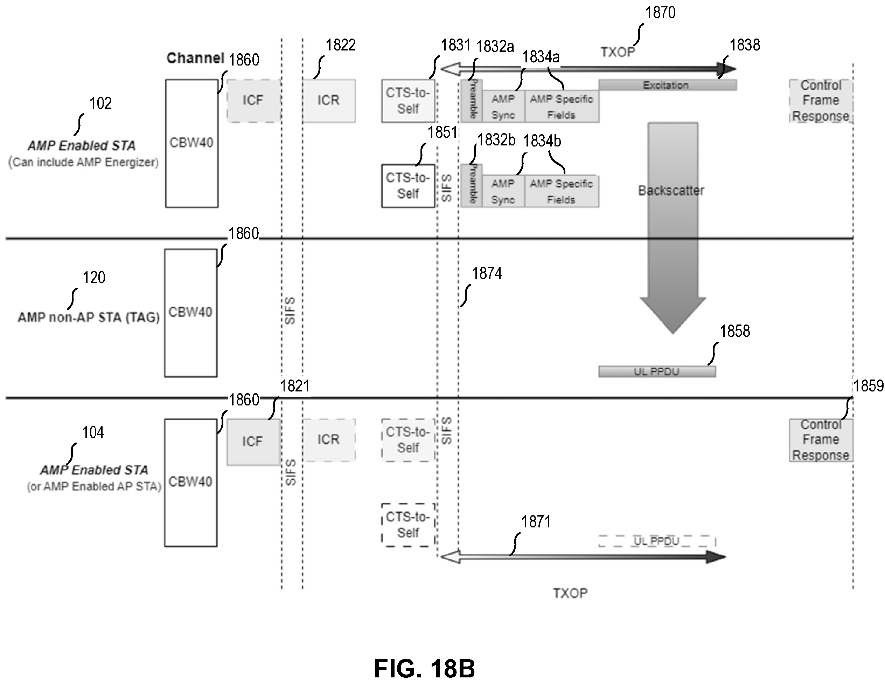

In some embodiments, the disclosed systems and methods can leverage the CBW40 mode defined in the IEEE 802.11 standard. The excitation signal and the backscattered signal may occupy any suitable non-overlapping portions of a CBW40 channel. The initiator and the receiver operating in the CBW40 mode can sense both signal channels simultaneously without having to switch between channels. The backscatter communication scenarios illustrated in FIGS. 16B, 16C, 18A and 18B provide example embodiments of how the CBW40 mode may be leveraged. For the example embodiments illustrated in FIGS. 16B and 16C, a 20MHz excitation signal and a 20MHz backscattered signal occupy adjacent 20MHz channels 1660. For the example embodiment illustrated in FIGS. 18A and 18B, a 10MHz excitation signal and a 10MHz backscattered signal occupy adjacent 20MHz channels 1860. In other embodiments, any other suitable combination of excitation signal and backscattered signal may be used to enable leveraging the CBW40 mode. In some embodiments, the CBW40 mode may be the high throughput HT40 mode.

Reference is now made to FIGS. 16A and 16B. FIG. 16A is a process flow for an example embodiment of a method 1600 for channel protection during backscatter communication. FIG. 16B is a schematic diagram of an example modified backscatter communication scenario implemented using method 1600. The backscatter communication scenario illustrated in FIG. 16B may be implemented for example excitation signal 1508b and backscattered signal 1512b shown in FIG. 15B. Excitation signal 1508b and backscattered signal 1512b occupy adjacent 20MHz channels 1516b and 1520b respectively.

In the illustrated backscatter communication scenario, the initiator 102 and the receiver 104 may both operate in the CBW40 mode so that each of the initiator and the receiver can sense both adjacent 20MHz channels 1660 (corresponding to channels 1516b and 1520b shown in FIG. 15B) simultaneously.

At act 1610, the receiver may transmit an initial control frame (ICF) 1621 on a first 20MHz channel. In the illustrated example, the first channel is included in a first portion of the CBW40 channel 1660.

At act 1620, the initiator may receive the ICF transmitted at act 1610. The initiator may respond to the received ICF by transmitting an initial control frame response (ICR) 1622 on the first 20MHz channel.

At act 1630, the initiator may send a CTS-to-Self 1631 on the first 20MHz channel and a CTS-to-Self 1651 the second 20MHz channel (that is adjacent to the first 20MHz channel). Because the initiator can sense both adjacent 20MHz channels simultaneously in the CBW40 mode, the initiator can send both the CTS-to-Self 1631 and 1651. The two CTS-to-Self can set corresponding TXOPs 1670 and 1671 on the first 20MHz channel and the second 20MHz channel. After sending the two CTS-to-Self, the initiator may start AMP transmission after a SIFS delay1674. This transmission may start with a preamble 1632 and may be followed by one or more initial fields 1634 to notify the AMP tag of upcoming backscattering excitation signal 1638.

In some embodiments, the receiver may transmit a null data packet (NDP) physical layer protocol data unit (PPDU) or padding frame after receiving the CTS-to-Self sent by the transmitter. The NDP PPDU/padding frame can keep the second 20MHz channel busy while waiting for the backscattered signal. Reference is now additionally made to FIG. 16C. FIG. 16C is a schematic diagram of another backscatter communication scenario implemented using method 1600. In the example illustrated in FIG. 16C, the receiver transmits a padding frame 1654 to keep the second 20MHz channel busy while waiting for the backscattered signal.

At act 1640, an AMP tag 120 may backscatter the excitation signal 1638 on the first 20MHz channel to generate a backscattered signal 1658 on the second 20MHz channel.

At act 1650, the receiver may wait at least for the TXOP duration on the second 20MHz channel 1671 to receive the backscattered signal. If the backscattered signal is successfully received during this period, the receiver may send a CFR 1659 to the initiator. The CFR can indicate successful receipt of the backscattered signal to the initiator. If the backscattered signal is not successfully received during this period, the receiver may send a CFR to the initiator. The CFR can indicate unsuccessful receipt of the backscattered signal to the initiator.

In the illustrated example, the receiver sends the CFR to the initiator on the first 20MHz channel. Because the initiator and the receiver can sense both 20MHz channels simultaneously, in other examples, the receiver may send the CFR to the initiator on the second 20MHz channel.

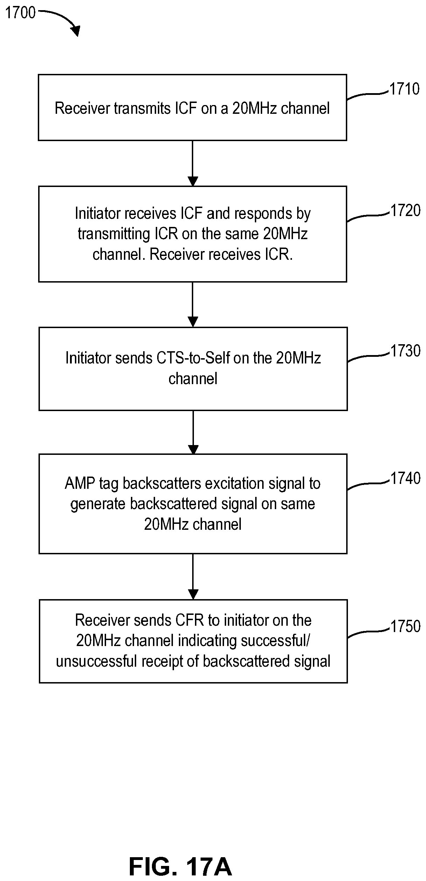

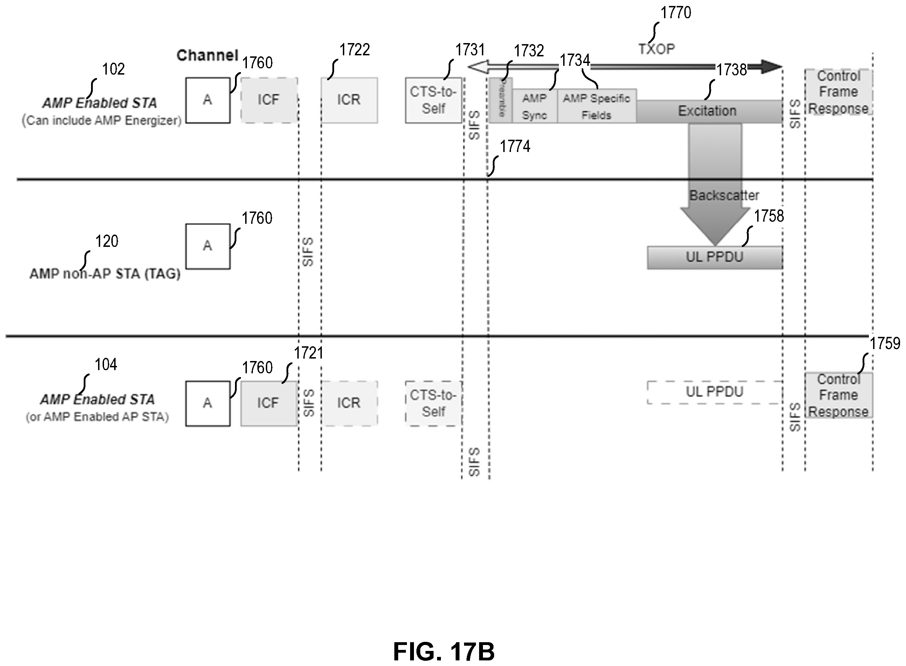

Reference is now made to FIGS. 17A and 17B. FIG. 17A is a process flow for an example embodiment of a method 1700 for channel protection during backscatter communication. FIG. 17B is a schematic diagram of an example modified backscatter communication scenario implemented using method 1700. The backscatter communication scenario illustrated in FIG. 17B may be implemented for example excitation signal 1508a and backscattered signal 1512a shown in FIG. 15A. Excitation signal 1508a and backscattered signal 1512a are 10MHz signals that each occupy approximately half of a 20MHz channel.

At act 1710, the receiver may transmit an initial control frame 1721 (ICF) on a 20MHZ channel 1760 (channel A in the illustrated example).

At act 1720, the initiator may receive the ICF transmitted at act 1710. The initiator may respond to the received ICF by transmitting an initial control frame response (ICR) 1722 on the same 20MHz channel.

At act 1730, the initiator may send a CTS-to-Self 1731to set up a TXOP 1770 on the 20MHz channel. After sending the CTS-to-Self, the initiator may start AMP transmission after a SIFS delay 1774. This transmission may start with a preamble 1732 and may be followed by one or more initial fields 1734 to notify the AMP tag of upcoming backscattering excitation signal 1738. The excitation signal can be a 10MHz signal that occupies a first portion of the 20MHz channel.

At act 1740, an AMP tag may backscatter the excitation signal 1738 to generate a 10MHz backscattered signal 1758 that occupies a second portion of the same 20MHz channel (channel A in the illustrated example). The second portion may be non-overlapping and adjacent to the first portion. For example, each of the excitation signal and the backscattered signal may occupy approximately half of the 20MHz channel.

At act 1750, the receiver may wait at least for the TXOP duration 1710 to receive the backscattered signal 1758. If the backscattered signal is successfully received during this period, the receiver may send a CFR 1759 to the initiator. If the backscattered signal is not successfully received during this period, the receiver may send a CFR to the initiator. The CFR can indicate unsuccessful receipt of the backscattered signal to the initiator. The receiver may send the CFR using the same 20MHz channel (channel A in the illustrated example).

Reference is now made to FIGS. 16A and 18A. FIG. 18A is a schematic diagram of an example modified backscatter communication scenario implemented using method 1600. The backscatter communication scenario illustrated in FIG. 18A may be implemented for example excitation signal 1508c and backscattered signal 1512c shown in FIG. 15C. Excitation signal 1508c and backscattered signal 1512c are 10MHz signals that each occupy approximately half of adjacent 20MHz channels 1516c and 1520c respectively.

In the backscatter communication scenario illustrated in FIG. 18A, the initiator 102 and the receiver 104 may both operate in the CBW40 mode so that each of the initiator and the receiver can sense both 20MHz channels 1860 (corresponding to channels 1516c and 1520c shown in FIG. 15C) simultaneously.

At act 1610, the receiver may transmit an initial control frame (ICF) 1821 on a first 20MHz channel. In the illustrated example, the first channel is included in a first portion of the CBW40 channel 1860. In some embodiments, an ICF may not be used and there may be no trigger frame. Instead, the system may skip act 1610 and proceed to act 1620, wherein the initiator may transmit a first frame (e.g., a control frame) on one of the channels to initiate the process.

At act 1620, the initiator may receive the ICF transmitted at act 1610. The initiator may respond to the received ICF by transmitting an initial control frame response (ICR) 1822 on the first 20MHz channel. As stated above, in some embodiments, the initiator may not receive an ICF or any other trigger frame and instead may transmit a first frame at act 1620.

At act 1630, the initiator may send a CTS-to-Self 1831 on the first 20MHz channel and a CTS-to-Self 1851 on the second 20MHz channel (that is adjacent to the first 20MHz channel). Because the initiator can sense both adjacent 20MHz channels simultaneously in the CBW40 mode, the initiator can send both the CTS-to-Self. The two CTS-to-Self can set corresponding TXOPs 1870 and 1871 on the first 20MHz channel and the second 20MHz channel. After sending the two CTS-to-Self, the initiator may start AMP transmission after a SIFS delay 1874. This transmission may start with a preamble 1832 and may be followed by one or more initial fields 1834 to notify the AMP tag of upcoming backscattering excitation signal 1838. The excitation signal can be a 10MHz signal that occupies an approximately half portion of the first 20MHz channel and an approximately quarter portion of the CBW40 channel 1860.

In various implementations, CTS-to-Self protection on one or both channels may be performed by the initiator, the receiver, or both. For example, the initiator may transmit CTS-to-Self on both channels; the receiver may transmit CTS-to-Self on both channels; or the initiator may transmit CTS-to-Self on one channel while the receiver transmits CTS-to-Self on the other. It can be advantageous for the initiator to transmit both CTS-to-Self because the initiator controls the subsequent SIFS-timed AMP transmission, enabling better alignment and more deterministic protection of the CBW40 bandwidth.

At act 1640, an AMP tag 120 may backscatter the excitation signal 1838 on the first 20MHz channel to generate a backscattered signal 1858 on the second 20MHz channel. The backscattered signal can be a 10MHz signal that occupies an approximately half portion of the second 20MHz channel and an approximately quarter portion of the CBW40 channel 1860. As illustrated in FIG. 15C, the 10MHz excitation signal and the 10MHz backscattered signal may have a 20MHz separation.

At act 1650, the receiver may wait at least for the TXOP duration 1871 on the second 20MHz channel to receive the backscattered signal. If the backscattered signal is successfully received during this period, the receiver may send a CFR 1859to the initiator. The CFR can indicate successful receipt of the backscattered signal to the initiator. If the backscattered signal is not successfully received during this period, the receiver may send a CFR to the initiator. The CFR can indicate unsuccessful receipt of the backscattered signal to the initiator.

In the illustrated example, the receiver sends the CFR to the initiator on the first 20MHz channel. Because the initiator and the receiver can sense both channels simultaneously in the CBW40 mode, in other examples, the receiver may send the CFR to the initiator on the second 20MHz channel. For the same reason, any of the frames - other than the frames contained in the excitation signal and the backscattered signal - described herein, with reference to FIGS. 16, 18A, and 18B can be sent on the first 20 MHz channel, the second 20 MHz channel, or on both channels, including a trigger frame such as an ICF, an initial trigger frame response such as an ICR, a first frame, a control frame, a CTS-to-Self, a preamble, one or more initial fields, a trigger frame response such as a CFR, or any other suitable communication frame. Frame placement on a channel may be selected based on any factor.

One or more CTS-to-Self may be transmitted, by either the initiator/transmitter or received, before any trigger frame, ICF, or other communication frame transmitted in any of the herein described backscatter communication scenarios. Sending the CTS-to-Self earlier can reserve the relevant channel or channels first, ensuring that subsequent transmissions occur within a protected transmission opportunity. In other embodiments, one or more CTS-to-Self may be transmitted, by either the initiator/transmitter or received, in any order relative to the other communication frames transmitted in the herein described backscatter communication scenarios.

Reference is now made to FIGS. 16A and 18B. FIG. 18B is a schematic diagram of an example modified backscatter communication scenario implemented using method 1600. The backscatter communication scenario illustrated in FIG. 18B may be substantially similar to the backscatter communication scenario illustrated in FIG. 18A except that the preamble 1832 and initial fields 1834 are transmitted on both the first and second channel. In the backscatter communication scenario illustrated in FIG. 18B, the initiator and the receiver may also both operate in the CBW40 mode so that each of the initiator and the receiver can sense both 20MHz channels simultaneously.

At act 1630, the initiator of the backscatter communication scenario illustrated in FIG. 18B, may send a CTS-to-Self 1831 on the first 20MHz channel and a CTS-to-Self 1851 on the second 20MHz channel (that is adjacent to the first 20MHz channel). Because the initiator can sense both adjacent 20MHz channels simultaneously in the CBW40 mode, the initiator can send both the CTS-to-Self. The two CTS-to-Self can set corresponding TXOPs on the first 20MHz channel and the second 20MHz channel. The TXOPs on the first 20MHz channel and the second 20MHz channel may be the same.

As described with reference to FIG. 18A, channel protection through CTS-to-Self transmissions may be performed by the initiator, by the receiver, or by both devices. For example, the initiator may transmit the CTS-to-Self on both channels; the receiver may transmit the CTS-to-Self on both channels; or each device may transmit a CTS-to-Self on a different one of the channels.

After sending the two CTS-to-Self, the initiator may start AMP transmission after a SIFS delay on both the first 20MHz channel and the second 20MHz channel, as shown in FIG. 18B. The transmission on the first 20MHz channel may start with a preamble 1832a and may be followed by one or more initial fields 1834a to notify the AMP tag of upcoming backscattering excitation signal 1838. The transmission on the second 20MHz channel may start with a preamble 1832b and may be followed by one or more initial fields 1834b. The initial fields 1834b may be used to notify the AMP tag of upcoming backscattering excitation signal 1838. The transmission of the preamble 1832b and initial fields 1834b may be used to protect the second channel. In some embodiments, the transmission of the preamble followed by one or more initial fields may be identical on the first 20MHz channel and the second 20MHz channel. In additional embodiments, the preamble and initial fields may be transmitted on only the first channel or only the second channel.

In some embodiments, the preamble may be an HT (Legacy) Preamble and the initial fields may be an AMP Sync field, an AMP SIG, field, and/or an AMP Specific Data field.

Transmitting the preamble and one or more initial fields on both the first 20MHz channel and the second 20MHz channel protects both channels for the duration of the initial transmission interval. This approach may provide two advantages. First, by keeping both channels busy, the system maintains channel protection across both channels, reducing the likelihood of interference. Second, receiving two time-aligned copies increases the probability that the AMP tag can detect and decode the transmission information, thereby improving overall backscatter reliability.

While the above description provides examples of the embodiments, it will be appreciated that some features and/or functions of the described embodiments are susceptible to modification without departing from the spirit and principles of operation of the described embodiments. Accordingly, what has been described above has been intended to be illustrative of the invention and non-limiting and it will be understood by persons skilled in the art that other variants and modifications may be made without departing from the scope of the invention as defined in the claims appended hereto. The scope of the claims should not be limited by the preferred embodiments and examples, but should be given the broadest interpretation consistent with the description as a whole.

### CLAUSES:

Clause 1: A method of backscatter communication comprising: transmitting, by a transmitter, a communication frame on at least one of a first channel and a second channel, the communication frame comprising: timing data indicating a transmission time and a duration of an excitation signal to be transmitted by the transmitter on the first channel; receiving, by the receiver, the communication frame; protecting, by the transmitter or the receiver, access to the first channel and the second channel for a protection period corresponding to the transmission time and the duration of the excitation signal; transmitting, by the transmitter, the excitation signal on the first channel; and backscattering, by a backscattering tag, the excitation signal to generate a backscattered signal on the second channel.
Clause 2: The method of any other clause, wherein the transmitter and the receiver each sense both the first channel and the second channel simultaneously.
Clause 3: The method of any other clause, wherein the first channel and the second channel occupy non-overlapping portions of a CBW40 channel.
Clause 4: The method of any other clause, wherein the first channel and the second channel are each a 20 MHz channel.
Clause 5: The method of any other clause, wherein the transmitter protects access to the first channel for the protection period by transmitting a first Clear to Send-to-Self (CTS-to-self) packet on the first channel and the transmitter protects access to the second channel for the protection period by transmitting a second CTS-to-self packet on the second channel.
Clause 6: The method of any other clause, wherein the first CTS-to-self packet comprises a first transmission opportunity (TXOP) duration and the second CTS-to-self packet comprises a second TXOP duration, the first TXOP duration and the second TXOP duration being the same.
Clause 7: The method of any other clause, further comprising transmitting, by the transmitter, on the first channel and the second channel, a preamble and at least one initial field after transmitting the first CTS-to-self packet and the second CTS-to-self packet.
Clause 8: The method of any other clause, wherein the at least one initial field comprises at least one ambient power (AMP) field operable to notify the backscattering tag of the transmitting of the excitation signal on the first channel.
Clause 9: The method of any other clause, further comprising receiving, by the receiver, the backscattered signal on the second channel; and responsive to receiving the backscattered signal, sending, by the receiver, a response on at least one of the first channel and the second channel to indicate successful receipt of the backscattered signal to the transmitter.
Clause 10: The method of any other clause, further comprising sending, by the receiver, a response on at least one of the first channel and the second channel to indicate non-successful receipt of the backscattered signal to the transmitter after failure to successfully receive the backscattered signal within a period indicated by the communication frame.
Clause 11: The method of any other clause, wherein the communication frame is a trigger frame response transmitted in response to receiving a trigger frame transmitted by the receiver.
Clause 12: A system for backscatter communication comprising: a transmitter configured to: transmit a communication frame on at least one of a first channel and a second channel, the communication frame comprising timing data indicating a transmission time and a duration of an excitation signal to be transmitted by the transmitter on the first channel; and transmit the excitation signal on the first channel; a receiver configured to: receive a communication frame; wherein at least one of the transmitter and the receiver is configured to protect access to the first channel and the second channel for a protection period corresponding to the transmission time and the duration of the excitation signal; and a backscattering tag configured to: backscatter the excitation signal to generate a backscattered signal, the backscattered signal transmitted on the second channel.
Clause 13: The system of any other clause, wherein the transmitter and the receiver each are further configured to sense both the first channel and the second channel simultaneously.
Clause 14: The system of any other clause, wherein the first channel and the second channel occupy non-overlapping portions of a CBW40 channel.
Clause 15: The system of any other clause, wherein the first channel and the second channel are each a 20 MHz channel.
Clause 16: The system of any other clause, wherein the transmitter is further configured to protect access to the first channel for the protection period by transmitting a first CTS-to-self packet on the first channel and to protect access to the second channel for the protection period by transmitting a second CTS-to-self packet on the second channel.
Clause 17: The system of any other clause, wherein the first CTS-to-self packet comprises a first TXOP duration and the second CTS-to-self packet comprises a second TXOP duration, the first TXOP duration and the second TXOP duration being the same.
Clause 18: The system of any other clause, wherein the transmitter is further configured to transmit on the first channel and the second channel, a preamble and at least one initial field after transmitting the first CTS-to-self packet and the second CTS-to-self packet.
Clause 19: The system of any other clause, wherein the at least one initial field comprises at least one ambient power (AMP) field operable to notify the backscattering tag of the transmitting of the excitation signal on the first channel.
Clause 20: The system of any other clause, wherein the receiver is further configured to:
   receive the backscattered signal on the second channel; and
   responsive to receiving the backscattered signal, send a response on at least one of the first channel and the second channel to indicate successful receipt of the backscattered signal to the transmitter.
11 Clause 21: The system of any other clause, wherein the receiver is further configured to:
   send a response on at least one of the first channel and the second channel to indicate non-successful receipt of the backscattered signal to the transmitter after failure to successfully receive the backscattered signal within a period indicated by the communication frame.
Clause 22: The system of any other clause, wherein the communication frame is a trigger frame response transmitted in response to receiving a trigger frame transmitted by the receiver.

## Claims

1. A method of backscatter communication comprising:
transmitting, by a transmitter, a communication frame on at least one of a first channel and a second channel, the communication frame comprising:
timing data indicating a transmission time and a duration of an excitation signal to be transmitted by the transmitter on the first channel;
receiving, by the receiver, the communication frame;
protecting, by the transmitter or the receiver, access to the first channel and the second channel for a protection period corresponding to the transmission time and the duration of the excitation signal;
transmitting, by the transmitter, the excitation signal on the first channel; and
backscattering, by a backscattering tag, the excitation signal to generate a backscattered signal on the second channel.

2. The method of claim 1, wherein the transmitter and the receiver each sense both the first channel and the second channel simultaneously.

3. The method of any one of claim 1 or claim 2, wherein the first channel and the second channel occupy non-overlapping portions of a CBW40 channel.

4. The method of any one of claims 1 to 3, wherein the first channel and the second channel are each a 20 MHz channel.

5. The method of any one of claims 1 to 4, wherein the transmitter protects access to the first channel for the protection period by transmitting a first Clear to Send-to-Self (CTS-to-self) packet on the first channel and the transmitter protects access to the second channel for the protection period by transmitting a second CTS-to-self packet on the second channel.

6. The method of claim 5, wherein the first CTS-to-self packet comprises a first transmission opportunity (TXOP) duration and the second CTS-to-self packet comprises a second TXOP duration, the first TXOP duration and the second TXOP duration being the same.

7. The method of claim 5 or claim 6, further comprising:
transmitting, by the transmitter, on the first channel and the second channel, a preamble and at least one initial field after transmitting the first CTS-to-self packet and the second CTS-to-self packet.

8. The method of claim 7, wherein the at least one initial field comprises at least one ambient power (AMP) field operable to notify the backscattering tag of the transmitting of the excitation signal on the first channel.

9. The method of any one of claims 1 to 8, further comprising:
receiving, by the receiver, the backscattered signal on the second channel; and
responsive to receiving the backscattered signal, sending, by the receiver, a response on at least one of the first channel and the second channel to indicate successful receipt of the backscattered signal to the transmitter.

10. The method of any one of claims 1 to 8, further comprising:
sending, by the receiver, a response on at least one of the first channel and the second channel to indicate non-successful receipt of the backscattered signal to the transmitter after failure to successfully receive the backscattered signal within a period indicated by the communication frame.

11. The method of any one of claims 1 to 10, wherein the communication frame is a trigger frame response transmitted in response to receiving a trigger frame transmitted by the receiver.

12. A system for backscatter communication comprising: a transmitter, a receiver, and a backscattering tag, the system being configured to perform the method according to any one of claims 1 to 11.
